(19) Europäisches Patentamt
European Patent Office
Office européen des brevets

(11) **EP 2 174 701 B1**

(12) **EUROPEAN PATENT SPECIFICATION**

(45) Date of publication and mention
of the grant of the patent:
**26.06.2019 Bulletin 2019/26**

(51) Int Cl.:
***B01D 53/94*** *(2006.01)*     ***B01J 35/00*** *(2006.01)*
***B01J 35/04*** *(2006.01)*     ***B01J 37/02*** *(2006.01)*

(21) Application number: **09252369.5**

(22) Date of filing: **07.10.2009**

(54) **HONEYCOMB FILTER**

WABENFILTER

FILTRE EN NIDS D'ABEILLES

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.10.2008 JP 2008262371
29.09.2009 JP 2009224033**

(43) Date of publication of application:
**14.04.2010 Bulletin 2010/15**

(73) Proprietor: **NGK Insulators, Ltd.
Nagoya-shi, Aichi-ken (JP)**

(72) Inventor: **Takashi Mizutani
c/o Legal Affairs and Int..
Nagoya City, Aichi-ken, 467-8530 (JP)**

(74) Representative: **Mewburn Ellis LLP
City Tower
40 Basinghall Street
London EC2V 5DE (GB)**

(56) References cited:
**EP-A1- 0 736 503     EP-A1- 0 834 343
EP-A1- 1 273 339     EP-A1- 1 433 519
EP-A1- 1 437 491     EP-A2- 0 766 993
EP-A2- 1 576 998     WO-A1-00/01463
JP-A- 2003 210 922     JP-A- 2005 296 936**

**Description**

BACKGROUND OF THE INVENTION

Field of the Invention

The present invention relates to a catalyst loading filter used to collect particulates included in an exhaust gas discharged from an internal combustion engine such as a diesel engine or various types of burning devices or to purify the exhaust gas.

Description of the Related Art

A large amount of particulate material (hereinafter appropriately referred to as "particulate matter", "particulates" or "PM") mainly containing soot (graphite) is included in an exhaust gas discharged from an internal combustion engine such as a diesel engine or various types of burning devices (hereinafter appropriately referred to as "the internal combustion engine or the like"). When the particulates are discharged as they are to the atmosphere, environment pollution is caused. Therefore, it is general to mount a filter for collecting the particulates in an exhaust gas flow path from the internal combustion engine or the like.

Examples of the filter used for such a purpose include a honeycomb filter having a honeycomb structure provided with a plurality of cells as gas through channels partitioned by partition walls made of a porous ceramic material having a large number of pores. One opening end and the other opening end of each of the plurality of cells are alternately plugged with plugging portions. Furthermore, in recent years, a honeycomb filter including an oxidizing catalyst (hereinafter appropriately referred to as "the catalyst loading filter") has been used to promote the oxidation (burning) of the particulates.

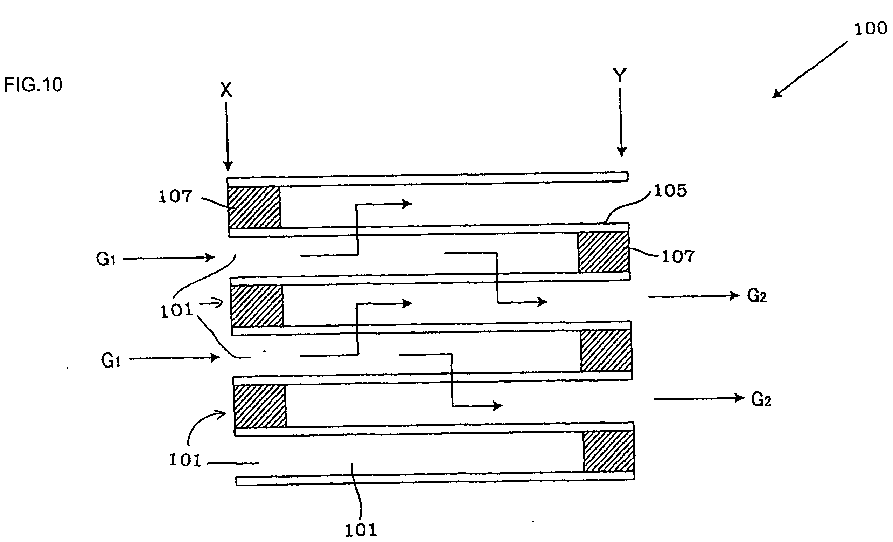

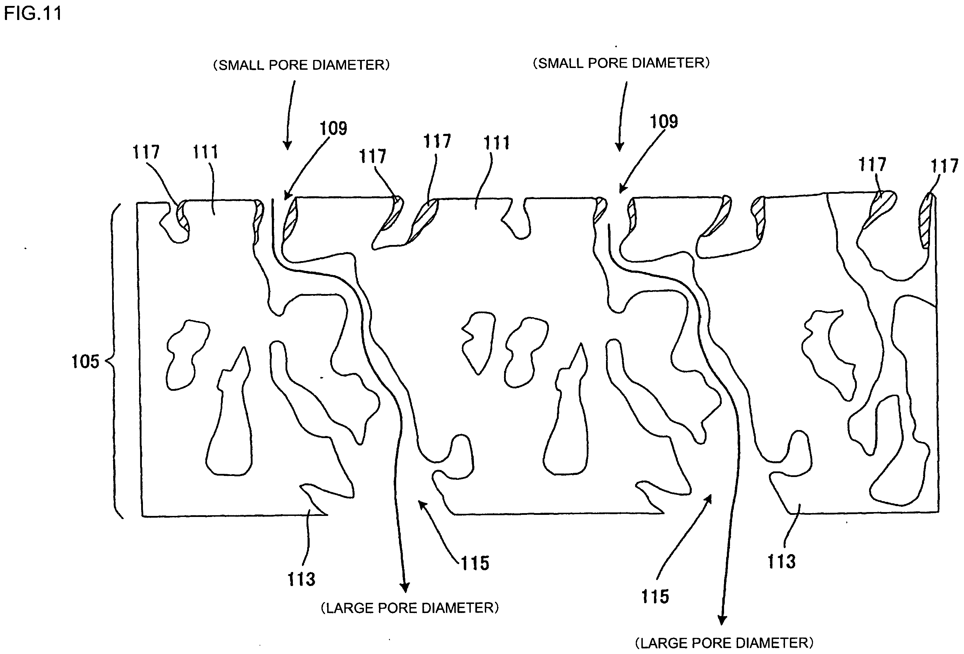

A honeycomb filter 100 shown in, for example, Figs. 10, 11 is the honeycomb structure 100 having a plurality of cells 101 which become gas through channels partitioned by partition walls 105 made of a porous ceramic material having a large number of pores. One opening end X and the other opening end Y of each of the plurality of cells 101 are alternately plugged with plugging portions 107. Furthermore, openings 109 of pores formed on an inlet side 111 of the partition wall 105 are coated with a catalyst 117, and a gas $G_1$ flows into the partition wall from the openings 109 of the pores and is discharged to the adjacent cell as the through channel from openings 115 of pores formed on an outlet side 113 of the partition wall.

Thus, in a conventional filter, when the exhaust gas is caused to flow into exhaust gas inflow cells, and passes through the partition walls, the particulates in the exhaust gas are collected by the partition walls, and the gas purified by removing the particulates therefrom is discharged from outflow cells. In addition, the oxidizing catalyst loaded in the surfaces of the partition walls of the honeycomb filter and the inner surfaces of the pores present in the partition walls promotes the oxidation (the burning) of the particulates, whereby the particulates in the exhaust gas can be decreased and the exhaust gas can effectively be purified.

Meanwhile, in such a catalyst loading filter made of the porous ceramic material including a collection layer having such an average pore diameter that the particulates included in the exhaust gas can securely be collected, layers having smaller pore diameters are formed on the inlet side of the partition walls as compared with the outlet side thereof, and the layers having the small pore diameters are further coated with the catalyst. However, after the layers formed on the partition walls are coated with the catalyst, permeability after the coating with the catalyst decreases, because the catalyst layer has smaller pore diameters than those of the partition walls. In particular, when the exhaust gas flows into the partition walls at a high inflow rate, the initial pressure loss of the partition walls increases, and the fluctuations of the pressure loss increase, which causes a problem.

That is, in a conventional DPF, when each inlet layer of the partition wall is the catalyst layer having a small average pore diameter and coated with the layer-like catalyst as described above, a high soot burning speed cannot easily be obtained while suppressing the increase of the pressure loss before the soot is deposited. In other words, the catalyst itself has a high permeation resistance, that is, a low permeability, and hence the permeation resistance through the catalyst layer increases, thereby increasing a pressure loss sometimes. Thus, in the catalyst layer having pore diameters smaller than those of the partition wall, it is difficult to perform the purification treatment of the exhaust gas which might be generated when the engine is driven in a high-load high-speed running mode as compared with a usual running mode, and a regeneration efficiency is further decreased.

To solve such a problem, the performance of the DPF provided with the catalyst has been evaluated on various operating conditions. As to the effect of the catalyst on the burning of the soot, it has been found that when the soot directly comes in contact with the catalyst, the catalyst does not decrease the activation energy for burning the soot to increase a regeneration speed. Instead, when the filter is coated with the catalyst, the burning properties at a low temperature are improved owing to the influence of $NO_2$ generated by the catalyst. That is, it has been found that even when the PM does not necessarily come in contact with the catalyst, the PM can be burnt at the low temperature by use of the effect of the catalyst.

Here, to solve the above problem, Patent Documents 1, 2 are suggested as follows.

Patent Document 1 discloses a catalyst filtering device in which layers (films) having pore diameters smaller than those of partition walls are formed on the inlet side of the partition walls, and are coated with a catalyst for a purpose of "filtering a particulate material generated by the catalyst reaction of a fluid and the components of the fluid, when the fluid passes through a filter". However, "the small layers" of Patent Document 1 have small pore diameters, and hence the soot hardly enters "the above small layers". Therefore, the soot does not sufficiently come in contact with the catalyst, and eventually a sufficient soot regeneration efficiency cannot be obtained.

Moreover, in Patent Document 2, when layers formed on partition walls are coated with a catalyst, the layers have pores smaller than those of the partition walls, and hence permeability after the coating with the catalyst decreases, whereby an initial pressure loss at a high flow rate increases. Furthermore, the fluctuations of the pressure loss increase, and the purification treatment of the exhaust gas generated when an engine is driven in the high-load high-speed running mode cannot sufficiently be performed, whereby the regeneration efficiency is decreased.

As described above, either of Patent Documents 1, 2 cannot sufficiently solve the problem, and the problem has not been solved yet, whereby a further improvement is demanded.

EP 1437491 A1 discloses a filter catalyst for purifying exhaust gases. The filter catalyst has a honeycomb structure, a catalyst layer and a fibrous layer.

EP 0736503 A1 discloses an exhaust gas purifying filter and a process for its production. A coating layer is formed on the surface of a matrix, the matrix having multiple pores. The coating is formed of a ceramic powder and a pore-forming material, in order to form pores through the coating layer.

EP 0766993 A2 discloses a wall-flow type filter for purifying exhaust gases. A catalyst is carried in the pores formed in the porous walls of the filter.

EP 1273339 A1 discloses a ceramic filter loaded with catalyst.

EP 1576998 A2 discloses an exhaust gas filter. A micropore structure is formed at a base body of the filter, at the surface of the base body or within pores of the base body.

[Patent Document 1] JP T 07-505083
[Patent Document 2] U.S. Pat. No. 5,221,484 Specification

SUMMARY OF THE INVENTION

The present invention has been developed in view of the problem of the above conventional technology, and an object thereof is to provide a honeycomb filter in which partition walls are provided with PM collection layers having a smaller average pore diameter than that of the partition walls, and coated with a catalyst without coating a portion including the surface of the PM collection layers with the catalyst, whereby a high soot burning speed can be obtained while obtaining an effect of suppressing the increase of a pressure loss, thereby increasing a regeneration efficiency. Furthermore, a purification treatment of an exhaust gas which might be generated when an engine is driven in a high-load high-speed running mode can be performed, and the regeneration efficiency is increased. Above all, PM can be burnt at a low temperature by $NO_2$ back diffusion.

Furthermore, the partition walls are coated with an NOx removing catalyst, and additionally the PM is collected by the PM collection layers. In consequence, an NOx purification efficiency increases, and any ash or sulfur component does not come in contact with the NOx catalyst, whereby the deterioration of the NOx catalyst can be suppressed.

According to the present invention, a catalyst loading filter is provided as follows.

[1] A catalyst loading filter as set out in claim 1.
[2] The catalyst loading filter according to [1], wherein the density of the catalyst which coats the PM collection layers is 150% or less of that of the catalyst which coats the partition walls.
[3] The catalyst loading filter according to any one of [1] to [2], wherein the catalyst which coats the partition walls is an NOx removing catalyst.
[4] A manufacturing method of the catalyst loading filter according to any one of [1] to [3], including the steps of: coating, with the catalyst, the partition walls disposed in the base material of the honeycomb structure; and then forming the PM collection layers onto the base material.
[5] A manufacturing method of the catalyst loading filter according to any one of [1] to [3], including the steps of: forming the PM collection layers having a pore former added thereto on to the base material; coating, with the catalyst, the desired regions of the PM collection layers and/or the partition walls; and then burning off the pore former to form pores in the PM collection layers during the baking of the catalyst.

According to the present invention, it is possible to produce an effect of providing the honeycomb filter in which the partition walls are provided with the PM collection layers having a smaller average pore diameter than that of the partition walls, and coated with the catalyst without coating a portion including the surface of the PM collection layers with the catalyst, whereby a high soot burning speed can be obtained while obtaining an effect of suppressing the increase of a pressure loss, and a regeneration efficiency is increased. Furthermore, it is possible to perform the purification treatment of the exhaust gas which might be generated when an engine is driven in a high-load high-speed running mode, and the regeneration efficiency is increased. In addition, the purification treatment function of the catalyst can be improved while realizing the improvement of the durability of the catalyst. Above all, PM can be burnt at a low temperature by $NO_2$ back diffusion.

Furthermore, the partition walls are coated with an NOx removing catalyst, and additionally the PM is collected by the PM collection layers, whereby an NOx purification efficiency increases, and any ash or sulfur component does not come in contact with the NOx catalyst. In consequence, the deterioration of the NOx catalyst can be suppressed.

BRIEF DESCRIPTION OF THE DRAWINGS

Fig. 1 is a schematic diagram showing a ceramic filter to which one embodiment of the present invention is applied, and is a perspective view of the ceramic filter.

Fig. 2 is a schematic diagram showing the ceramic filter of Fig. 1, and is a plan view of the ceramic filter.

Fig. 3 is a sectional view schematically showing the ceramic filter of Fig. 1.

Fig. 4 is a partially sectional view schematically showing a part of a partition wall in a catalyst loading filter in the present embodiment.

Fig. 5 is a partially sectional view schematically showing a part of the partition wall in the catalyst loading filter in the present embodiment.

Fig. 6 is a partially enlarged sectional view schematically showing a part of a partition wall in another embodiment of the catalyst loading filter in the present embodiment.

Fig. 7 is a partially enlarged sectional view schematically showing a part of the partition wall in the other embodiment of the catalyst loading filter in the present embodiment.

Fig. 8 is a schematic diagram showing a ceramic filter to which the other embodiment of the present invention is applied, and is a perspective view of the ceramic filter.

Fig. 9 is a schematic diagram for explaining a test piece used for measuring a permeability.

Fig. 10 is a schematic diagram showing a conventional ceramic filter, and is a sectional view of the ceramic filter.

Fig. 11 is a partially enlarged view of Fig. 10, schematically showing the section of the filter.

Description of Reference Numerals

1: catalyst filter, 1A: catalyst loading filter, 3: cell, 4: partition wall, 5: pore, 11: opening end, 11a: one opening end, 11b: other opening end, 13: plugging portion, 15: catalyst, 20: PM collection layer, 62: honeycomb segment, 63: joined honeycomb segment article, 64: joining material, 66: outer peripheral coat layer, 95: test piece, 97: remaining rib, 100: (conventional) honeycomb filter, 101: cell, 105: partition wall, 107: plugging portion, 109: opening, 111: inlet side, 113: outlet side, 115: opening, 117: catalyst, G: exhaust gas, $G_1$: exhaust gas (before treated), $G_2$: (treated) exhaust gas, X: one opening end, Y: other opening end, and Z: the region of the remaining portion of the PM collection layer excluding the PM deposition region of the PM collection layer on the upstream side thereof.

Detailed Description of the Invention

Hereinafter, embodiments for carrying out a ceramic filter of the present invention will specifically be described. However, the present invention broadly includes the ceramic filter provided with inventive specific matters, and is not limited to the following embodiment.

[1] Catalyst loading filter of the Present Invention:

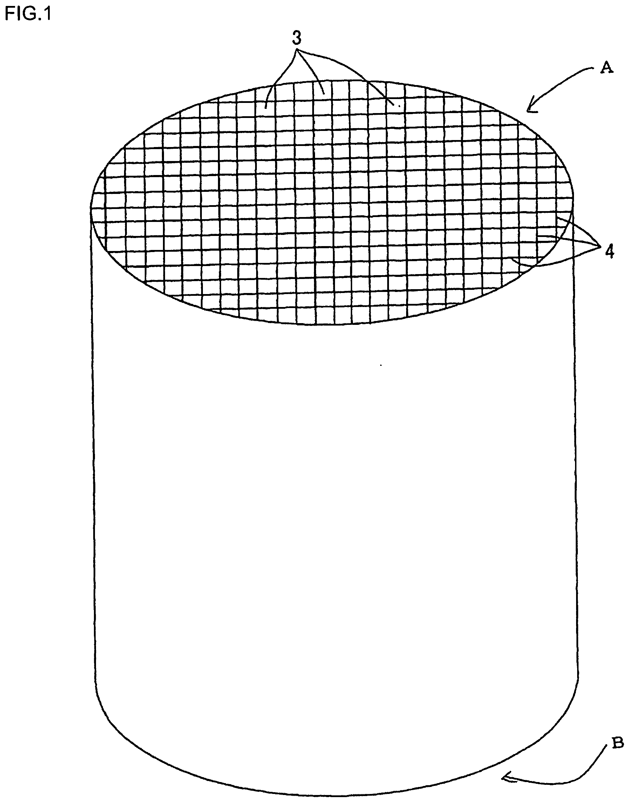

As shown in Figs. 1 to 5, a catalyst loading filter 1 of the present invention is the catalyst loading filter 1 made of a base material of a honeycomb structure including a plurality of cells 3 as through channels of an exhaust gas which are partitioned by partition walls 4 made of a porous ceramic material having a large number of pores. The filter includes plugging portions 13 which alternately plug one opening end 11a and the other opening end 11b of each of the plurality of cells 3. The partition walls 4 are provided with PM collection layers 20 having a smaller average pore diameter than that of the partition walls, and coated with a catalyst 15 without coating a portion including the surface of the PM collection layers with the catalyst in a constitution of the catalyst loading filter 1.

[1-1] PM Collection Layer:

In the catalyst loading filter of the present embodiment, the partition walls made of the porous ceramic material having a large number of pores are provided with the PM collection layers having a smaller average pore diameter than that of the partition walls as inlet layers. That is, when the layers having the smaller average pore diameter than that of the partition walls are formed as the PM collection layers onto the partition walls, the PM collection layers perform a function of collecting particulate matter (the PM) mainly containing soot (graphite) of the exhaust gas to stop the passage of the soot through the pores. In other words, a reason why the PM collection layers perform a function of stopping the passage of the soot through the pores is that when the soot passes through the pores, the soot is deposited in the pores, and the pressure loss during the deposition of the soot might increase. Therefore, while suppressing the increase of the pressure loss, a high soot burning speed is obtained.

Furthermore, the catalyst itself has a high permeation resistance, that is, a low permeability. Therefore, when the catalyst itself is applied as a catalyst layer loaded in the whole PM collection layer, pore diameters become smaller than those of each partition wall. In consequence, a permeation resistance through the catalyst layer increases, and the pressure loss increases sometimes. That is, in the catalyst layer having pore diameters smaller than those of the partition wall, it is difficult to perform a purification treatment of the exhaust gas which might be generated when an engine is driven in a high-load high-speed running mode, unlike a usual running mode. Furthermore, a regeneration efficiency is decreased. Eventually, in a conventional catalyst loading filter, it is difficult to sufficiently perform the purification treatment of the exhaust gas which might be generated when the engine is driven in the high-load high-speed running mode, unlike the usual running mode, and the regeneration efficiency is also decreased. However, in a case where the partition walls are provided with the PM collection layers and coated with the catalyst as in the present embodiment, even when the engine is driven in the high-load high-speed running mode, the soot and ash can securely be collected by the PM collection layers while decreasing the pressure loss. Furthermore, since the PM collection layers collect the soot and ash, the improvement of the durability of the catalyst loaded in the partition walls can be realized, and burning properties at a low temperature can be improved.

On the other hand, when the PM collection layers are not coated with the catalyst, the soot does not directly come in contact with the catalyst in the PM collection layers. According to the present embodiment, however, in the mechanism of the soot burning in the catalyst, $NO_2$ generated by the catalyst decreases the activation energy of the soot burning to increase a regeneration speed. Therefore, the catalyst which coats the partition walls as described later securely promotes the purification treatment. That is, even when the PM does not necessarily come in contact with the catalyst, $NO_2$ back diffusion can be caused to burn the PM at a low temperature by use of the effect of the catalyst.

In other words, as the mechanism of the soot burning by the catalyst, it has been found that even in a case where the soot does not directly come in contact with the catalyst so that the catalyst decreases the activation energy of the soot burning to increase the regeneration speed, when the filter is coated with the catalyst, the burning properties at the low temperature are improved by the influence of $NO_2$ generated by the catalyst. Therefore, according to the above constitution, even when the PM does not necessarily come in contact with the catalyst, the PM can be burnt at the low temperature by use of the effect of the catalyst, whereby the high soot burning speed can be obtained while decreasing the pressure loss.

Here, "the $NO_2$ back diffusion" is a phenomenon where NO flowing into the partition walls through the PM collection layers comes in contact with the catalyst which coats the base material (the partition walls) of the honeycomb structure, and hence changes to $NO_2$, and with this change, the concentration gradient of $NO_2$ is generated from the PM collection layers to the partition walls. By a static reaction between NO and $NO_2$, $NO_2$ flows into the PM collection layers (i.e., the layers including the soot), and the soot is regenerated by $NO_2$.

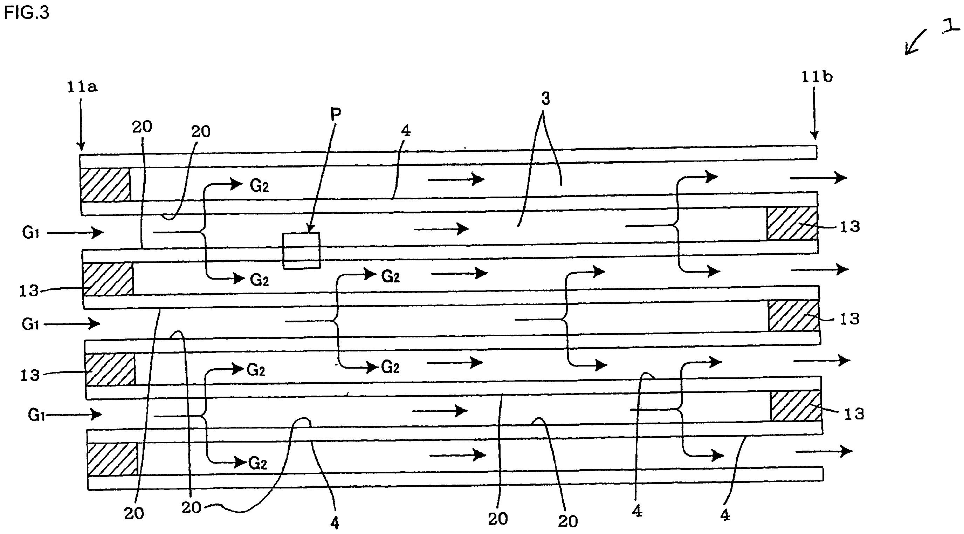

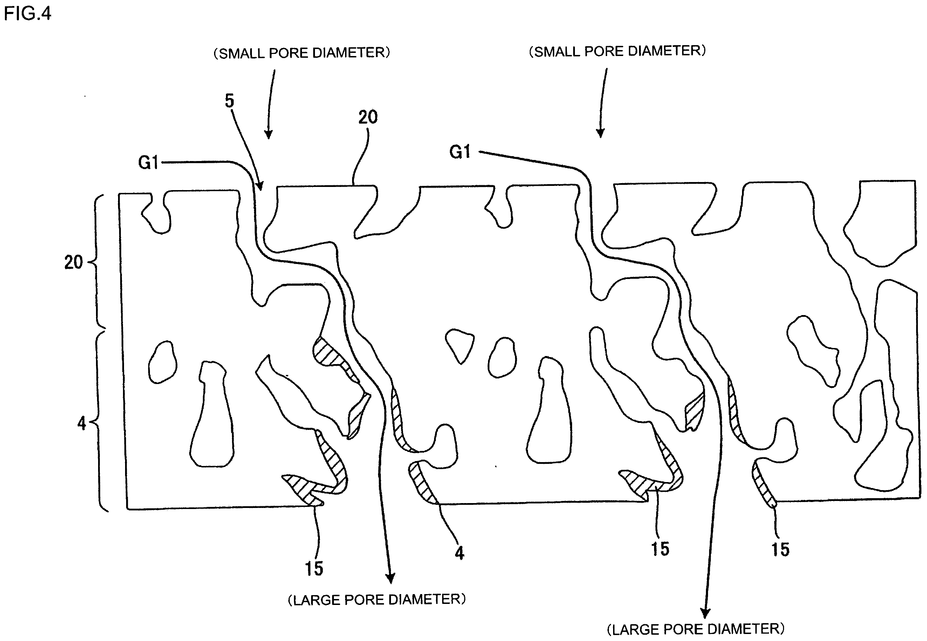

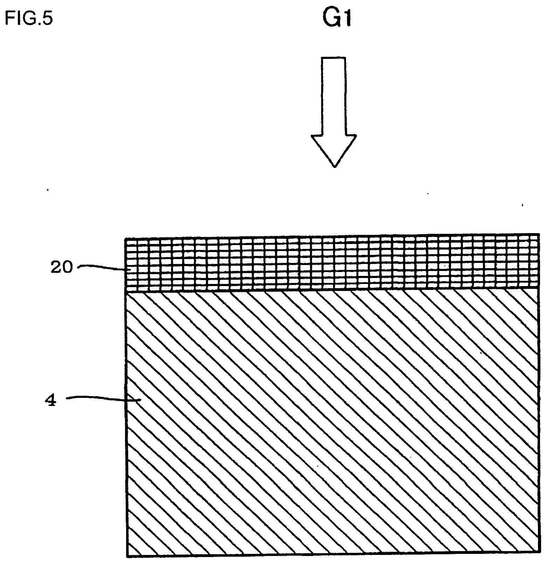

Specific examples of the PM collection layers include layers formed at inlets of inflow paths of the gas in the partition walls 4 of the cells 3 and regions around the inlets as shown in Figs. 4, 5 (see reference numeral 20 in Figs. 3, 4).

It is to be noted that the application of the PM collection layers "onto the partition walls" indicates that the layers are formed on the partition walls disposed on the inflow side of the gas. That is, it is indicated that regions as the PM collection layers having a smaller average pore diameter than that of the partition walls are formed on the partition walls disposed in the base material of the honeycomb structure on the inflow side of the gas in order to prevent the penetration of the soot. In other words, the PM collection layers are formed as inlets on the inflow side of the gas. Specifically, as shown in Figs. 4, 5, the PM collection layers 20 are formed as the inlets of gas inflow paths on the partition walls 4 of the cells 3. It is to be noted that "outlet layers on the outflow side of the gas" are regions formed on partition walls disposed on and near the gas outflow side of the cells among partition walls disposed in the base material of the honeycomb structure on the outflow side of the gas. Specifically, as shown in Figs. 4, 5, the outlet layers are gas outflow paths (outlets) in the partition walls of the cells and regions near the paths.

Moreover, "the permeability" mentioned herein is a physical property value calculated by the following equation (1), and is a value which becomes an index indicating the permeation resistance in a case where a predetermined gas passes through members (the partition walls).

$$C = \frac{8FTV}{\pi D^2 (P^2 - 13.839^2)/13.839 \times 68947.6} \times 10^{-4} \quad \cdots \quad (1),$$

in which C is the permeability ($m^2$), F is a gas flow rate ($cm^3/s$), T is the thickness (cm) of a sample, V is a gas viscosity (dynes●sec/$cm^2$), D is the diameter (cm) of the sample, and P is a gas pressure (PSI), respectively. Moreover, in the above equation (1), numeric values are 13.839 (PSI) = 1 (atm), and 68947.6 (dynes●sec/$cm^2$) = 1 (PSI) .

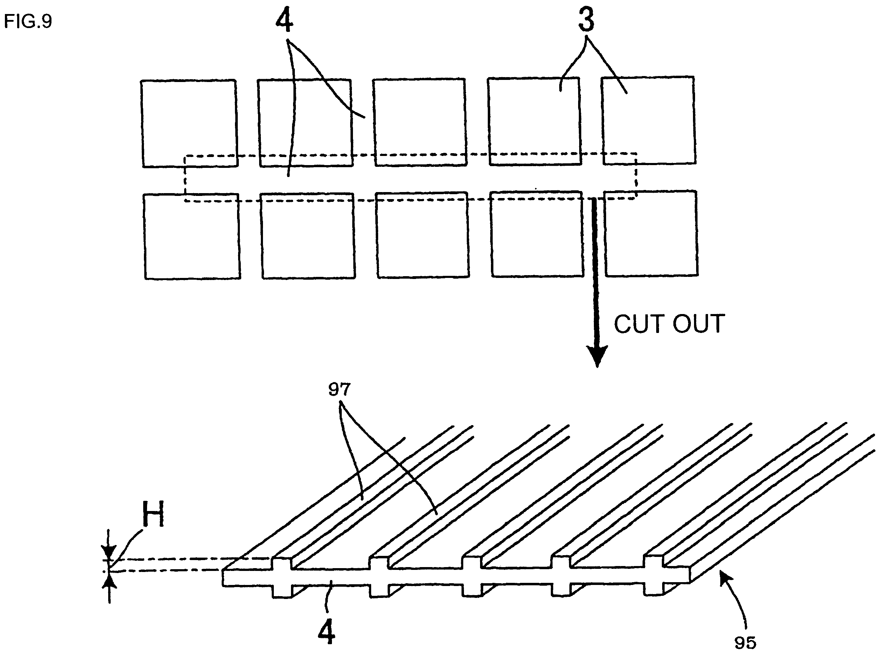

As the measurement procedure of the permeability, in case of either the honeycomb structure or a honeycomb catalyst article, as shown in Fig. 9, room-temperature air is passed through a square plate cut out so that one partition wall has a rib remaining height H of 0.2 mm or less, or the partition wall 4 of a disc-like test piece 95, and the permeation resistance at this time is measured and obtained by Equation 1. In this case, a flowable seal such as grease is preferably used so that the air does not leak from gaps between remaining ribs 97 and the seal. Moreover, there are used measurement results in a range of calculated partition wall passage flow speeds of 0.1 cm/sec or more and 1 cm/sec or less as an air flow rate range.

Moreover, "an average pore diameter" and "a porosity" mentioned herein are the average pore diameter and the porosity measured by mercury porosimetry. Here, in the case that the pore properties of a structure having the PM collection layers formed thereon are measured by mercury porosimetry, when the pore capacity shows the two-peak distribution in a region smaller than the pore distribution of the partition walls of the base material due to the pore properties of the PM collection layers, the lower peak top of the pore distribution is determined as the average pore diameter of the PM collection layer. In the case that the two-peak distribution is not shown even if the structure having the PM collection layers formed thereon is subjected to measurement by mercury porosimetry, binarization may be performed from a SEM observation image of a resin-embedded polished article to calculate the average pore diameter from the inscribed circle distribution in a region of the PM collection layers. In addition, regarding the porosity of the PM collection layers, binarization may be performed from a SEM observation image of a resin-embedded polished article to measure the porosity of the PM collection layers.

It is to be noted that in the present embodiment, the present invention is not limited to a double layer structure including the PM collection layer as the inlet of the inflow path of the gas and the outlet layer on the outflow side of the gas, and each partition wall may have a constitution in which, for example, an intermediate layer having a different average pore diameter is provided between the PM collection layer and the outlet layer of the partition wall to provide three or more layers.

Furthermore, the embodiment will be described with reference to Figs. 4, 5. As shown in Figs. 4, 5, the PM collection layer 20 is formed (the film is formed) on the gas inflow side of each cell 3. This PM collection layer 20 has an average pore diameter smaller than that of the partition wall 4 on and near the gas inflow side, and can hence prevent the penetration of the soot. It is to be noted that Fig. 4 is a cross-sectional view showing the section of the catalyst loading filter in a length direction thereof in the present embodiment, and Fig. 5 is a partially sectional view schematically showing a part of the partition wall in the catalyst loading filter of the present embodiment.

In addition, in a catalyst loading filter of the present embodiment, the partition walls are coated with the catalyst without coating a portion including the surface of the PM collection layers with the catalyst. That is, the portion including the surface of the PM collection layers (the PM deposition region of the PM collection layer on the upstream side thereof) is not coated with the catalyst, but the remaining region excluding the portion including the surface of the PM collection layers (the region of the PM collection layer excluding the PM deposition region) is coated with the catalyst, whereby the pressure loss can be decreased in the region into which the PM flows. In other words, the pressure loss which might be generated during the inflow of the PM can be considered to be a stress applied in a case where the PM further flows into pores clogged with the deposited PM, rather than a stress applied in a case where the PM flows into pore walls (of the PM collection layer) which form the pores of the PM collection layer. The PM collection layer includes small pores for collecting the PM. However, in a case where the catalyst is loaded and the pore diameters are decreased more than necessary, even when a small amount of PM is deposited, the pressure loss is increased. To solve the problem, the PM deposition region (of the PM collection layer) is not coated with the catalyst (any catalyst is not loaded), and the catalyst coats the region (of the PM collection layer) on which any PM is not deposited, whereby the deposited PM is decreased to decrease the pressure loss. Thus, by coating the partition walls with a catalyst without coating a portion including the surface of the PM collection layers, the PM collection layers partially perform a role (function) of collecting the PM and a catalyst function while preventing the pressure loss.

Here, "without coating a portion including the surface of the PM collection layers" means "coating the catalyst on the remaining region of the PM collection layers, with the remaining region excluding the region which is located on the upstream side of the PM collection layers and where PM deposits" as described above.

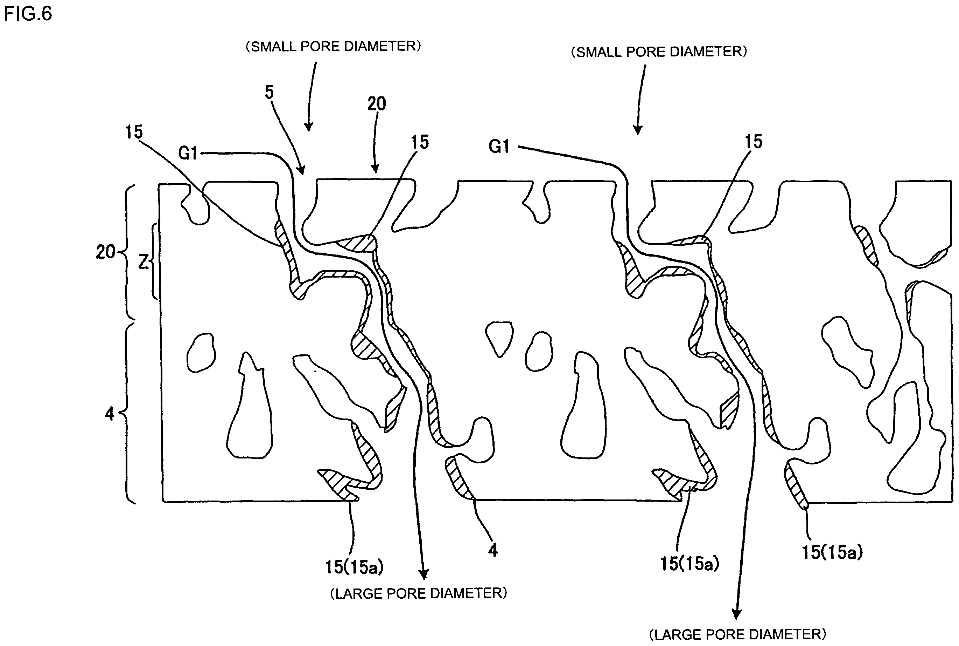

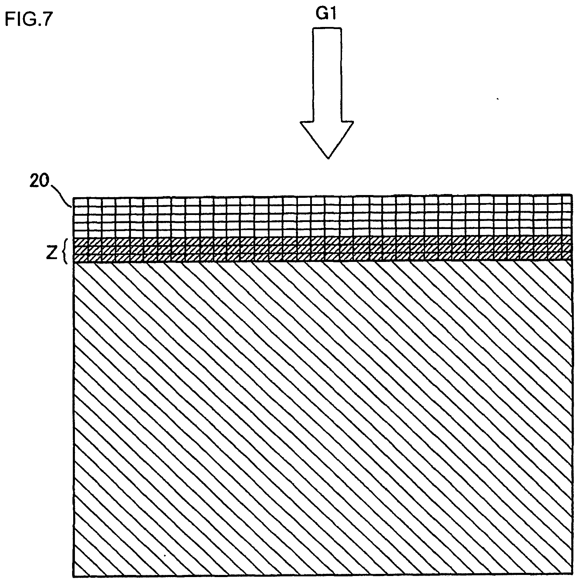

Specifically, as shown in Figs. 6, 7, a PM collection layer 20 (a film) is formed on the gas inflow side of the cells 3. This PM collection layer 20 has an average pore diameter smaller than that of the partition wall 4 disposed on the outflow side of the gas or a partition wall near the partition wall 4, whereby the penetration of the soot can be prevented. Furthermore, without coating a portion including the surface of the PM collection layers with the catalyst, that is, a region Z of each remaining portion of the PM collection layer excluding a PM deposition region of the PM collection layer 20 on an upstream side thereof is coated with the catalyst. It is to be noted that Fig. 6 is a cross-sectional view showing the section of the catalyst loading filter in a length direction thereof in the present embodiment, and Fig. 7 is a partially sectional view schematically showing a part of a partition wall in the catalyst loading filter of the present embodiment.

According to such a constitution, the upper portions of the pores of the PM collection layers (on the inlet side of the exhaust gas) collect the PM, and in the lower portions of the pores of the PM collection layers (the regions of the remaining portions of the PM collection layers excluding the PM deposition regions of the PM collection layers on the upstream side thereof), the catalyst loaded in the pores can improve a soot burning function.

Here, when the regions of the remaining portions of the PM collection layers excluding the PM deposition regions of the PM collection layers on the upstream side thereof are coated with the catalyst, the soot does not directly come in contact with the catalyst. However, according to the present embodiment, in the mechanism of the soot burning in the catalyst, $NO_2$ generated by the catalyst decreases the activation energy of the soot burning to increase the regeneration speed. In other words, by the direct contact between the soot and the catalyst, the catalyst does not decrease the activation energy of the soot burning to increase the regeneration speed. Therefore, even when the PM does not necessarily come in contact with the catalyst, the PM can be burnt at a low temperature by use of the effect of the catalyst, whereby a high soot burning speed can be obtained while decreasing the pressure loss.

It is to be noted that in addition to the coating of the partition walls with the catalyst as described later, the regions of the remaining portions of the PM collection layers excluding the PM deposition regions of the PM collection layers on the upstream side thereof are coated with the catalyst, whereby the PM collection layers securely collect the PM, and the regions of the remaining portions of the PM collection layers excluding the PM deposition regions of the PM collection layers can securely perform a soot removal treatment.

Here, "the upstream side of the PM collection layers" is the side of the PM collection layers into which the exhaust gas flows, and excludes regions near the side of the partition walls, or outflow regions where the exhaust gas flowing into the PM collection layers is discharged toward the partition walls. "The PM deposition regions" on the upstream side of the PM collection layers are regions where the PM is collected and deposited in the pores of the PM collection layers on the upstream side of the PM collection layers. Moreover, "the regions of the remaining portions of the PM collection layers" excluding the PM deposition regions of the PM collection layers on the upstream side thereof are the regions of the PM collection layers excluding "the PM deposition regions of the PM collection layers on the upstream side thereof".

Furthermore, a portion including the surface of each PM collection layer which is not coated with the catalyst is preferably 30% or more of the thickness of the PM collection layer from the surface of the PM collection layer toward the thickness direction. In a case where a portion including the surface (the region on the upstream side) of the PM collection layer which is not coated with the catalyst is 30% or more of the thickness of the PM collection layer from the surface of the PM collection layer toward the thickness direction, any PM is not deposited on the regions of the remaining region excluding a region including the surface of the PM collection layer (the remaining region on the upstream side) of the PM collection layers coated with the catalyst, and hence any immediate increase of the pressure loss is not seen. That is, in a case where the catalyst coats the region on which the PM might be deposited, a portion is generated in which in-pore flow paths are narrowed by the catalyst. When the PM is deposited on the portion, the immediate increase of the pressure loss easily occurs. However, the PM deposition region which immediately increases the pressure loss is less than 30% of the thickness of the PM collection layer from the surface of the PM collection layer toward the thickness direction. Therefore, at least the 30% region is preferably not coated with the catalyst. In other words, in a case where a portion including the surface (the region on the upstream side) of the PM collection layer which is not coated with the catalyst is provided "as much as 30% or more", the PM which might immediately increase the pressure loss is not deposited in the pores. Therefore, even when the layer is coated with the catalyst, the increase of the pressure loss can be controlled. The portion including the surface of the PM collection layer which is not coated with the catalyst is more preferably 50% or more, further preferably 80% or more. That is, a greater part of the PM is deposited on a portion smaller than 30% from the inlet side (from the surface of the PM collection layer toward the thickness direction), but a remarkably small amount of the PM might be deposited in a deeper portion. Therefore, when a portion of 50% or more, 80% or more is not coated with the catalyst, even the slight increase of the pressure loss can be suppressed. Thus, the PM collecting function of the PM collection layer, the purification treatment function of the catalyst loaded in the PM collection layer and the purification treatment function of the catalyst loaded in the partition wall can synergistically be performed, respectively. Furthermore, it is possible to produce a further effect of improving a regeneration treatment while decreasing the pressure loss.

Here, "the region on the upstream side of the PM collection layer which is not coated with the catalyst is 30% or more" means that "on the side of the PM collection layer which is not coated with the catalyst and into which the exhaust gas flows, the ratio of the region on the upstream side of the PM collection layer with respect to the whole PM collection layer is 30% or more." Similarly, "the region on the upstream side of the PM collection layer which is not coated with the catalyst is 50% or more (80% or more)" means that "on the side of the PM collection layer which is not coated with the catalyst and into which the exhaust gas flows, the ratio of the region on the upstream side of the PM collection layer with respect to the whole PM collection layer is 50% or more (80% or more) ."

Moreover, the density of the catalyst which coats the PM collection layer is preferably 150% or less, more preferably 100% or less, of the density of the catalyst which coats the partition walls. According to such a constitution, when the PM collection layer is coated with the catalyst, the flow paths of the pores in the PM collection layer can securely be secured. That is, when the catalyst is loaded in the PM collection layer, the flow paths of the pores in the PM collection layer are easily clogged. Moreover, even when the flow paths are not clogged, an unburnt gas does not easily pass through the flow paths, and hence the purification treatment of the catalyst which coats the partition wall is not easily promoted. Moreover, the amount of the catalyst loaded in the whole catalyst loading filter increases, thereby increasing cost burdens. Furthermore, the pressure loss is easily increased. Therefore, as described above, the density of the catalyst which coats the PM collection layers is set to an amount smaller than that of the catalyst which coats the partition walls, whereby while decreasing the pressure loss, the purification treatment of the catalyst improves, and the regeneration efficiency can be increased.

Here, a method for measuring a catalyst density is as follows. For example, in a measurement piece obtained by embedding a resin prepared by curing by mixing "Specifics Epoxy Based Resin (trade name) produced by Struers Co., Ltd." with "Specifics-20 Hardener (trade name) produced by Struers Co., Ltd." in a sample having the PM collection layers formed thereon, the catalyst material such as alumina or a noble metal was measured for the reflection intensity using an energy dispersive X-ray fluorescence ("EMA X-5770W" (trade name) produced by Horiba, Ltd.), using a scanning electron microscope ("S-3200N" (trade name) produced by Hitachi, Ltd.). Further, the reflection intensity of the base material and the PM collection layers (reflection intensity of the PM collection layers / reflection intensity of the partition walls) was evaluated as a catalyst density ratio.

It is to be noted that in a case where the amounts of the catalysts which coat the PM collection layers and the partition walls, respectively, are increased and the total amount of the catalyst loaded in the whole catalyst loading filter becomes excessively large, crack and the like are easily generated during the regeneration, and hence the total amount of the catalyst is preferably regulated.

[1-1-1] Catalyst:

Examples of the catalyst which coats the above desired regions of the PM collection layers include an oxidizing catalyst. However, the catalyst is not limited to this example, and a known catalyst may be applied to the present embodiment as long as the effect of the present application can be produced.

[1-1-1-1] Oxidizing Catalyst:

As the oxidizing catalyst, a noble metal such as platinum (Pt), palladium (Pd) or rhodium (Rh) is preferably used.

Moreover, another catalyst or a purification material may be loaded in the catalyst loading filter of the present invention. For example, an NOx adsorber made of an alkali metal (Li, Na, K, Cs or the like) or an alkali earth metal (Ca, Ba, Sr or the like), a ternary catalyst, a cocatalyst typified by an oxide of cerium (Ce) and/or zirconium (Zr), a hydrocarbon (HC) adsorbing material or the like may be loaded.

The catalyst may include, for example, Ce, and at least one of rare earth metals, alkali earth metals or transition metals.

Here, the rare earth metal may be selected from the group consisting of, for example, Sm, Gd, Nd, Y, Zr, Ca, La and Pr.

Moreover, the alkali earth metal included in the catalyst may be selected from the group consisting of, for example, Mg, Ca, Sr and Ba.

Furthermore, the transition metal included in the catalyst may be selected from the group consisting of, for example, Mn, Fe, Co, Ni, Cu, Zn, Sc, Ti, V and Cr.

Moreover, there is not any special restriction on a process of loading a catalyst component such as the oxidizing catalyst or the NOx adsorber, but examples of the process include a process of wash-coating the partition walls of the honeycomb structure with a catalyst solution including the catalyst component, followed by a thermal treatment at a high temperature and baking. Moreover, for example, by a process of attaching a ceramic slurry to the inlet layers of the partition walls of the base material of the honeycomb structure, followed by drying and firing, by use of a heretofore known ceramic film forming process such as a dipping process, a thin film like catalyst layer may be formed. In this case, the average pore diameter of the catalyst layers is set to a desired value by controlling the particle sizes, blend ratio or the like of aggregate particles in the ceramic slurry. The porosity may be set to a desired value by controlling the particle sizes of the aggregate particles in the ceramic slurry, the amount of the pore former or the like. The thickness of a coat layer may be set to a desired value by controlling the concentration of the ceramic slurry, a time required for forming the film or the like. It is to be noted that as to a fine coat layer, "at least one layer" is referred above, and hence two or more layers may be formed.

It is to be noted that a catalyst component such as the oxidizing catalyst or the NOx adsorber is loaded in a highly dispersed state. Therefore, the component is once loaded in a thermally resistant inorganic oxide having a large specific area, for example, alumina, and then loaded in the PM collection layers, the partition walls and the like of the honeycomb structure.

Moreover, the catalyst may be formed by applying a heretofore known catalyst loading process such as a suction process. In the process, the ceramic slurry may be loaded in the pores of the partition walls and/or the PM collection layers, followed by drying and firing.

Furthermore, the catalyst may be formed by applying a heretofore known catalyst loading process such as a suction process. In the process, the ceramic slurry may be loaded in the pores of the partition walls and/or the PM collection layers, followed by drying and firing, whereby the catalyst can be formed.

It is to be noted that "the catalyst is loaded in the PM collection layers" means that the catalyst is loaded in at least the PM collection layers. Moreover, in addition to the catalyst loaded in the PM collection layers, the catalyst loaded in the form of layers on the PM collection layers may be included. However, (when the catalyst is loaded in the partition walls and the PM collection layers,) the catalyst is loaded only in the PM collection layers, and the catalyst loaded in the form of the layers on the PM collection layers is preferably excluded. When the catalyst is formed in this manner, at least the surfaces of the PM collection layers can be exposed, and the pressure loss can further be decreased.

The average pore diameter of this PM collection layer is preferably set to an appropriate size in order to perform a purpose of collecting particulates. That is, in a case where the average pore diameter of the inlet layer of the partition wall is excessively small, when the PM collection layer collects the ash, the ash becomes a so-called lid at the upper portion of each pore of the PM collection layer (at an ash-inflow-side inlet or around the inlet), and the portion is easily clogged, whereby the inflow of the gas into the outlet layer of each partition wall might be blocked. When the inflow of the gas is blocked, the purification treatment of the catalyst loaded in the partition wall is disturbed, and the purification performance of the catalyst is unfavorably lowered. On the other hand, when the PM collection layer has an excessively large average pore diameter, the catalyst is not easily loaded in the desired region. Alternatively, even if the catalyst can be loaded to form the catalyst layer in the desired region, the PM is not easily collected. In consequence, the PM leaks toward the partition wall, and the gas might sufficiently not be purified. Therefore, the catalyst purification performance is unfavorably lowered.

In other words, the desired region is preferably loaded (coated) with the appropriate amount of the catalyst. When the desired region is loaded (coated) with the appropriate amount of the catalyst, the PM can sufficiently be collected and the loaded catalyst sufficiently functions.

Each PM collection layer has an average pore diameter of preferably 1 to 15 $\mu$m. When the average pore diameter is less than 1 $\mu$m, the permeability decreases, and the permeation resistance of the pores unfavorably easily immediately increases. When the average pore diameter is larger than 15 $\mu$m, the collection performance lowers, and PM emissions unfavorably easily exceed an European regulated value of Euro 5. Therefore, when the average pore diameter of the PM collection layer is regulated in the above desired range, the effect of the present application can be produced.

Moreover, the porosity of the PM collection layer is preferably 40 to 90%, more preferably 50 to 80%. When the porosity of the PM collection layer is less than 40%, a problem that the pressure loss increases might occur. When the porosity exceeds 90%, the strength of the PM collection layer runs short, which might unfavorably cause a problem that even the loaded catalyst peels. Furthermore, when the porosity of the PM collection layer is less than the above range, the amount of the deposited particulates is large, and the regenerating operation of the filter disadvantageously becomes difficult. When the above range is exceeded, the strength of the honeycomb structure of the catalyst loading filter lowers, and canning of the honeycomb structure disadvantageously becomes difficult.

It is to be noted that when the porosity of the PM removing catalyst layer is set to be 5% or more larger than that of the porous ceramic material of the partition wall, the pressure loss (the permeation pressure loss) in the PM removing catalyst layer can advantageously be decreased.

[1-2] Relation between PM Collection Layer and Catalyst Layer of Partition Wall:

In the present embodiment, the partition wall is preferably coated with the catalyst. This is because, the partition wall coated with the catalyst can produce the effect of the present application together with the above PM collection layer. Examples of the catalyst which coats the partition wall include the oxidizing catalyst. However, the present invention is not limited to such an example, and a known catalyst may be applied to the present embodiment as long as the effect of the present application can be produced.

It is to be noted that the catalyst which coats the partition wall is similar to that described in "[1-1-1-1] Oxidizing Catalyst", and hence the description thereof is omitted. Refer to the description of "[1-1-1-1] Oxidizing Catalyst".

Furthermore, the catalyst which coats the partition wall is preferably an NOx removing catalyst. In a case where the catalyst which coats the partition wall is the NOx removing catalyst, the partition wall coated with the catalyst can remarkably increase the purification efficiency together with the above PM collection layer while decreasing the pressure loss of the partition wall.

Here, the NOx catalyst remarkably depends on the concentration of sulfur included in light oil, but in general, when sulfur is deposited, the purification efficiency of the catalyst remarkably decreases. To prevent the decrease of the purification efficiency, sulfur needs to be removed once in about 1000 to 2000 km. To remove sulfur, the temperature of the catalyst has to be raised to about 650 to 700°C. However, when the catalyst temperature is raised to such a high temperature, the deterioration of the NOx catalyst accelerates. Meanwhile, sulfur is included in the light oil, and both dry soot and sulfur are included in the PM. The deposition distribution of sulfur depends on the deposition distribution of the PM. Therefore, when the PM collection layer as the inlet layer having a small average pore diameter collects the PM and any PM is not deposited on the downstream partition wall coated with the NOx purification catalyst as in the present embodiment, sulfur does not come in contact with the NOx catalyst, and does not have any adverse influence. That is, the decrease of the purification efficiency can be prevented.

Specifically, the NOx catalyst is formed by loading a catalyst metal and an NOx adsorbing material (the NOx adsorbing substance) in the surface of the partition wall.

Moreover, the catalyst metal may be platinum (Pt), palladium (Pd) or the like having an oxidizing activity in a temperature range higher than an activation start temperature. Furthermore, the NOx adsorbing material may be at least one selected from the group consisting of alkali metals such as potassium (K), sodium (Na), lithium (Li) and cesium (Cs), alkali earth metals such as barium (Ba) and calcium (Ca) and rare earth metals such as lanthanum (La) and yttrium (Y), or a combination of them. The material adsorbs NOx when the concentration of oxygen in the gas is high, and discharges NOx when the concentration of oxygen in the gas is low.

Moreover, as to this NOx adsorbing reduction type catalyst, in a high oxygen concentration atmosphere in which the exhaust gas is lean (lean-burn), NO in the exhaust gas is oxidized by the catalyst function of the catalyst metal to change to $NO_2$, diffused in the form of $NO_3^-$ in the catalyst, and absorbed in the form of nitrate salt ($Ba(NO_3)_2$) in the NOx adsorbing material. That is, barium carbonate ($BaCO_3$) changes to barium nitrate ($Ba(NO_3)_2$), whereby $NO_2$ is selectively adsorbed.

Furthermore, when the exhaust gas has a rich state and the concentration of oxygen decreases, $NO_3^-$ is discharged in the form of $NO_2$ from the NOx adsorbing material. That is, barium nitrate ($Ba(NO_3)_2$) changes to barium carbonate ($BaCO_3$), whereby $NO_2$ is discharged. This discharged $NO_2$ is subjected to the catalyst function of the catalyst metal by a reduction agent included in the exhaust gas, for example, unburnt HC, CO or $H_2$, and reduced to $N_2$. This reducing function disturbs the discharge of NOx to the atmosphere.

A behavior that the PM collection layer cooperates with the catalyst layer to perform the removal treatment of the soot and the purification treatment of the gas will specifically be described with reference to Figs. 6, 7.

As shown in Figs. 6, 7, a PM collection layer 20 is formed on the gas inflow side of each cell 3. Furthermore, a partition wall is formed under the PM collection layer, and a catalyst is loaded in the partition wall to form a catalyst layer. The average pore diameter of the PM collection layer 20 is smaller than that of each partition wall 4. In addition, regions of remaining portions of the PM collection layers excluding PM deposition regions of the PM collection layers on the upstream side thereof are coated with the catalyst. Moreover, the catalyst is loaded in the partition walls to form the catalyst layers. According to such a constitution, as shown in Figs. 6, 7, a gas $G_1$ flow into the PM collection layer, and PM is collected by the PM collection layer, especially by a 30% or more region of the whole PM collection layer on the upstream side thereof. Furthermore, the regions of the remaining portions of the PM collection layers excluding the PM deposition regions of the PM collection layers on the upstream side thereof are coated with the catalyst, but soot does not directly come in contact with the catalyst. However, $NO_2$ generated by the catalyst in this region lowers the activation energy of soot burning to increase a regeneration speed. That is, even when the PM does not come in contact with the catalyst, the PM can be burnt at a low temperature by use of the effect of the catalyst, and a high soot burning speed can be obtained while decreasing the pressure loss.

Furthermore, in a case where the exhaust gas flows into the partition wall through the PM collection layer, since the partition wall is coated with a catalyst such as the NOx catalyst, the purification treatment is further promoted, and the regeneration efficiency remarkably increases.

[1-3] Honeycomb Structure:

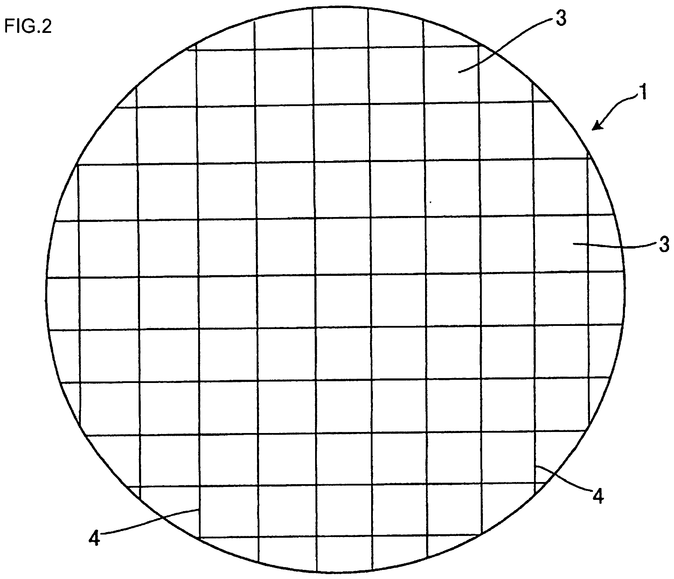

As shown in Figs. 1 to 5, the base material of the honeycomb structure in the present embodiment includes a plurality of cells 3 as the through channels of the exhaust gas which are partitioned by the partition walls 4 made of the porous ceramic material having a large number of pores. The one opening end 11a and the other opening end 11b of each of the plurality of cells 3 are alternately plugged with the plugging portions 13. However, there is not any special restriction on the whole shape of the honeycomb structure, and examples of the shape include a square columnar shape and a triangular columnar shape in addition to a cylindrical shape shown in Figs. 1, 2.

Moreover, examples of the shape of the cells disposed in the base material of the honeycomb structure (the cell shape in the section of the structure vertical to a cell forming direction) include the shapes of the square cells shown in Fig. 1, hexagonal cells and triangular cells. However, the present invention is not limited to such a shape, and broadly includes known cell shapes. Examples of a more preferable cell shape include the shapes of circular cells and square or polygonal cells. The circular cells or the square or polygonal cells are more preferable, because in the cell sections, a thick catalyst is prevented from adhering to corners, and the uniform thickness of the catalyst layer can be obtained. Above all, the hexagonal cells are preferable in consideration of a cell density, an open area ratio and the like.

There is not any special restriction on the density of the cells disposed in the base material of the honeycomb structure. However, when the structure is used as the catalyst loading filter as in the present embodiment, the cell density is in a range of preferably 6 to 1500 cells/square inch (0.9 to 233 cells/cm$^2$). Moreover, the thicknesses of the partition walls are in a range of preferably 20 to 2000 $\mu$m.

Furthermore, in a case where the structure is used as the catalyst loading filter as in the present embodiment, the base material of the honeycomb structure preferably has a structure in which one opening end and the other opening end of each of the plurality of cells are alternately plugged. As shown in, for example, Fig. 3, the honeycomb structure 1 having the plurality of cells 3 which become the through channels of the gas and which are partitioned by the partition walls 4 made of the porous ceramic material having a large number of pores may be a structure in which the one opening end 11a and the other opening end 11b of each of the plurality of cells 3 are alternately plugged with the plugging portions 13. In this honeycomb structure 1, when the exhaust gas $G_1$ is caused to flow into the exhaust gas inflow cells 3 opened toward an exhaust gas inflow side end surface A and the exhaust gas $G_1$ passes through the partition walls 4, the particulates in the exhaust gas $G_1$ are collected by the partition walls 4. The gas $G_2$ purified by removing the particulates therefrom is discharged from the purified gas outflow cells 3 opened toward an exhaust gas outflow side end surface B.

There is not any special restriction on the base material of the honeycomb structure, but the ceramic material is preferably usable. From the viewpoints of strength, thermal resistance, corrosion resistance and the like, at least one of cordierite, silicon carbide, alumina, mullite and silicon nitride is preferable.

Moreover, the above base material of the honeycomb structure can be obtained, for example, by mixing and kneading aggregate particles made of the ceramic material and water, and, if necessary, an organic binder (hydroxypropoxyl methyl cellulose, methyl cellulose or the like), a pore former (graphite, starch, synthetic resin or the like), a surfactant (ethylene glycol, fatty acid soap or the like) and the like to obtain a kneaded clay; forming the clay into a desired shape; drying the clay to obtain a formed article; and firing the formed article.

Examples of a process of preparing the honeycomb structure include the following example. However, the present invention is not limited to such a preparation process of the honeycomb structure, and a known preparation process of the honeycomb structure may be used.

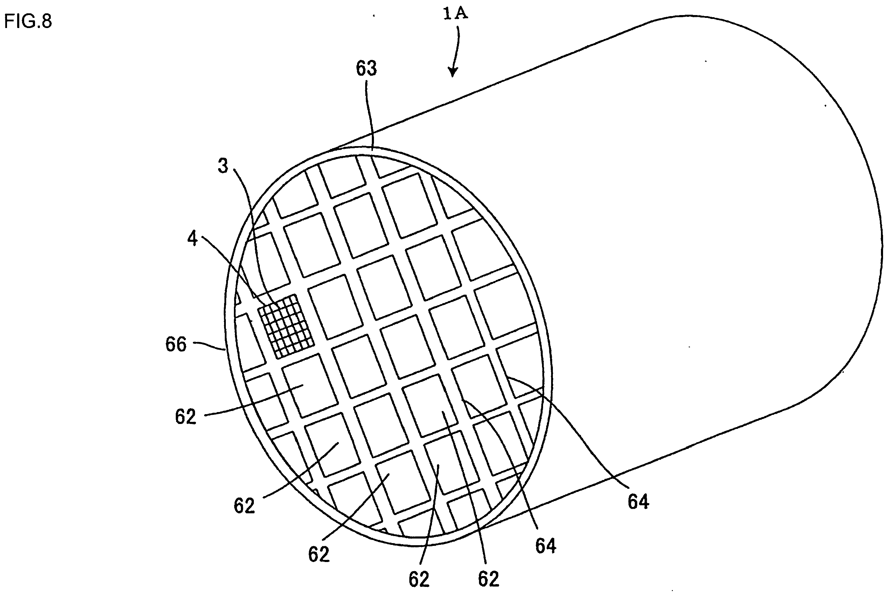

As shown in, for example, Fig. 8, in a case where the honeycomb structure is a joined honeycomb segment article 63 constituted of a plurality of honeycomb segments 62 and formed by cutting, into a desired shape, the outer peripheral surface of the segments joined via a joining material 64, the following procedure may be performed.

First, the honeycomb segments are prepared. As a honeycomb segment material, for example, SiC powder and metal Si powder are mixed at a mass ratio of 80:20, and methyl cellulose, hydroxypropoxyl methyl cellulose, the surfactant and water are added to and kneaded with the mixture, to obtain a kneaded clay having plasticity. Then, the clay is extruded by using a predetermined mold to form a formed honeycomb segment article having a desired shape. Subsequently, the resultant formed honeycomb segment article is dried by a microwave drier, completely dried by a hot air drier and plugged, followed by firing (calcinating).

This calcinating is performed for degreasing, and examples of the calcinating include an example in which the calcinating is performed in an oxidizing atmosphere at 550°C for about three hours, but the present invention is not limited to this example. The calcinating is preferably performed in accordance with an organic substance (an organic binder, a dispersant, a pore former or the like) in a formed honeycomb article. In general, the burning temperature of the organic binder is about 100 to 300°C, and the burning temperature of the pore former is about 200 to 800°C. Therefore, a calcinating temperature may be about 200 to 1000°C. There is not any special restriction on a calcinating time, but the time is usually about 3 to 100 hours.

Furthermore, firing (final firing) is performed. This "final firing" is an operation for sintering and densifying a forming material in a calcinated article to secure a predetermined strength. Firing conditions (the temperature and the time) vary in accordance with the type of the forming material, and appropriate conditions may be selected in accordance with the type. The firing temperature in case of the firing in, for example, an Ar inactive atmosphere is usually about 1400°C to 1500°C, but the present invention is not limited to this example.

Next, the pores of the partition walls of the inlet layers are coated with the catalyst. This catalyst is formed by a process of preparing a slurry containing silicon carbide powder; immersing the above honeycomb segments into the slurry; and removing the honeycomb segments from the slurry, followed by drying and firing. The silicon carbide powder contained in the slurry preferably has an average particle diameter of 0.3 to 5 μm, and is dispersed in a dispersion medium made of an organic polymer material or the like so as to regulate the viscosity thereof into about 50,000 cP. Furthermore, the firing temperature is preferably about 1400 to 1500°C.

After obtaining a plurality of honeycomb segments (a sintered article) having a desired dimension through the above steps, the peripheral surface of each honeycomb segment is coated with a joining slurry obtained by kneading aluminosilicate fiber, colloidal silica, polyvinyl alcohol and silicon carbide, and the honeycomb segments are assembled and pressed, followed by heating and drying, to obtain a joined honeycomb segment article having the whole square columnar shape. Then, the joined honeycomb segment article is ground and processed into a columnar shape, and the peripheral surface of the article is coated with an outer peripheral coat layer (see reference numeral 66 of Fig. 8) made of the same material as that of the formed honeycomb segment article, followed by drying and hardening, so that a columnar honeycomb structure having a segment structure can be obtained.

In a forming process of plugging portions, a plugging slurry is stored in a storage container. Then, one end surface of the structure on a masked side is immersed into the storage container, and the plugging slurry is charged into cell openings which are not masked to form the plugging portions. In the other end surface of structure, the cells which are plugged in the one end surface of the structure are masked, and the other cells are provided with plugging portions in the same manner as in the plugging portions in the one end surface of the structure. In consequence, the cells which are not plugged in the one end surface of the structure are plugged in the other end surface thereof. Even in the other end surface of the structure, the cells are alternately plugged in a checkered pattern. Moreover, the plugging may be performed after firing the formed honeycomb article to form a fired honeycomb article.

It is to be noted that when a plugging material similar to the honeycomb segment material is used, an expansion ratio can be set to a ratio equal to that during the firing of the honeycomb segments, which preferably results in the improvement of durability.

Moreover, when, for example, cordierite is used as a partition wall mother material, a dispersion medium such as water, and the pore former are added to a cordierite forming material, and further the organic binder and the dispersant are added and kneaded, thereby forming a puddle-like clay. There is not any special restriction on means for kneading the cordierite forming material to prepare the kneaded clay, and examples of the means include the use of a kneader, a vacuum kneader or the like. When the cordierite material is fired, the firing is preferably performed at 1410 to 1440°C for about 3 to 10 hours.

It is to be noted that as a forming process, a process is preferably used in which the clay prepared as described above is extruded by using a die having a desired cell shape, partition wall thicknesses and cell density.

[2-1] Manufacturing Method of the Present Embodiment:

As a manufacturing method of one embodiment of the catalyst loading filter of the present invention, a method is preferable in which the partition walls disposed in the base material of the honeycomb structure are coated with the catalyst and the PM collection layers are then formed onto the base material. This is because the filter is easily formed, and products having small fluctuations can be obtained.

Specifically, first the (joined and processed) honeycomb structure before forming the PM collection layers is prepared as described above. Then, a slurry is prepared as the catalyst to be loaded. It is to be noted that as the slurry to be prepared, a slurry of the oxidizing catalyst is prepared when the catalyst is, for example, a PM removing catalyst, and a slurry of a catalyst metal and an NOx adsorbing material is prepared when the catalyst is an NOx removing catalyst.

Next, the (joined and processed) honeycomb structure is dried at 120°C for two hours, and baked at 550°C for one hour. Furthermore, the inlet end surface of the honeycomb structure is immersed as much as a predetermined height thereof into the slurry of the PM removing catalyst, and the slurry is sucked from the outlet end surface of the structure for a predetermined time while regulating a suction pressure and a suction flow rate into predetermined values, whereby the catalyst is loaded in the whole base material of the honeycomb structure.

Furthermore, the inlet layer is formed onto the base material. Then, the layer is dried at 120°C for two hours, and baked at 550°C for one hour as described above. Thus, it is possible to obtain the catalyst loading filter in which the catalyst is not loaded in the PM collection layers.

It is to be noted that there is not any special restriction on a catalyst loading process, and a known loading process may be used. Examples of the process include dipping and a suction process.

Moreover, examples of a catalyst composition include an alumina:platinum:ceria based material = 7:1:2 (mass ratio), and examples of a ceria based material of the catalyst include Ce:Zr:Pr:Y:Mn = 60:20:10:5:5 (mass ratio).

[2-2] Manufacturing Method of the Present Embodiment:

As a manufacturing method of a catalyst loading filter of a second invention, a method is preferable in which PM collection layers formed by adding a pore former are formed onto a base material of a honeycomb structure, and desired regions of the PM collection layers and/or partition walls are coated with a catalyst, followed by burning off the pore former to form pores in the PM collection layers during catalyst baking. In a case where the honeycomb structure is coated with the catalyst from the outlet side of the structure while the pore former is present, the PM collection layers are not porous layers, and hence a catalyst slurry substantially cannot penetrate into the PM collection layers. Therefore, any catalyst inevitably is not loaded in the PM collection layers, and it is possible to securely prevent the penetration of the catalyst into the PM deposition regions in the PM collection layers owing to the fluctuations of pressure control during the coating with the catalyst. It is to be noted that "the catalyst baking" is a step of burning off the binder included in the catalyst slurry after the coating with the catalyst, and attaching or depositing the catalyst onto the base material.

Specifically, first the (joined and processed) honeycomb structure before forming the PM collection layers is prepared as described above. Then, the PM collection layers as inlet layers formed by adding a pore former to the base material of the honeycomb structure are prepared, and a slurry as a catalyst to be loaded is prepared. It is to be noted that as the slurry to be prepared, a slurry of an oxidizing catalyst is prepared when the catalyst is, for example, a PM removing catalyst, and a slurry of a catalyst metal and an NOx adsorbing material is prepared when the catalyst is an NOx removing catalyst.

Next, the (joined and processed) honeycomb structure is dried at 120°C for two hours, and baked at 550°C for one hour. Furthermore, the inlet end surface of the honeycomb structure is immersed as much as a predetermined height thereof into the slurry of the PM removing catalyst, and the slurry is sucked from the outlet end surface of the structure for a predetermined time while regulating a suction pressure and a suction flow rate into predetermined values, whereby the catalyst is loaded in the whole base material of the honeycomb structure.

Then, the material is dried at 120°C for two hours, and baked at 550°C for one hour as described above. Thus, it is possible to obtain the catalyst loading filter in which the catalyst is loaded in the desired regions of the PM collection layers.

It is to be noted that there is not any special restriction on a catalyst loading process, and a known loading process may be used. Examples of the process include dipping and a suction process. Moreover, the desired regions of the PM collection layers and the amount of the catalyst to be loaded in the desired regions are preferably regulated, if necessary, to obtain the above desired range and desired loading amount.

In particular, when the dipping process is used, for example, the structure is dipped into the catalyst slurry from the partition wall side of the structure which is an exhaust gas outlet side opposite to a PM collection layer side. Then, the slurry is sucked from the PM collection layer side while regulating a suction pressure, whereby the desired regions of the PM collection layer are preferably easily coated with the desired loading amount of the catalyst.

Moreover, examples of a catalyst composition include an alumina:platinum:ceria based material = 7:1:2 (mass ratio), and examples of a ceria based material of the catalyst include Ce:Zr:Pr:Y:Mn = 60:20:10:5:5 (mass ratio).

[Examples]

Hereinafter, the present invention will specifically be described with respect to examples, but the present invention is not limited to these examples. It is to be noted that "parts" and "%" in the following examples and comparative examples are parts by mass and mass% unless otherwise specified. Moreover, various type of evaluations and measurements in the examples were performed as follows.

[1] Catalyst Amount, Distribution Measurement Method:

The methods for measuring the catalyst amount and distribution were similar to the aforementioned method for measuring the catalyst density. Incidentally, measurement samples were cut out from three points of the upstream region, midstream region, and downstream region in one DPF. Measurement was performed in each of the regions to average out the values, and strength of the catalyst material in an article without the PM collection layer was measured. Regarding the partition walls of the base material, since there is no large catalyst distribution found in the thickness direction of the partition walls, measurement was performed in the central portion with respect to the thickness direction of the partition walls. Regarding an article having the PM collection layers, since there is a case of intentionally forming a catalyst coat distribution with respect to the thickness direction, measurement was performed in a portion near the contact portion of the PM collection layers with the partition walls of the base material.

[2-1] Experiment 1-1:

A catalyst coat DPF was mounted in a 2.0L diesel engine, and in order to evaluate a pressure loss performance on usual running conditions (an 80 km/h running simulation), pressure losses before and after the DPF were measured at a constant rate of 2000 rpm × 60 Nm while 4 g/L of soot was deposited.

[2-2] Experiment 1-2:

Next, in order to evaluate the pressure loss performance on high-load high-speed running conditions, pressure losses before and after the DPF were measured at a rate of 4000 rpm × 250 Nm.

[3] DPF:

(Example 1)

As to a honeycomb structure as a base material of a catalyst loading filter, mixed powder of 80 mass% of SiC powder and 20 mass% of metal Si powder was used as a raw material, and methyl cellulose, hydroxypropoxyl methyl cellulose, a surfactant and water were added to the powder to prepare a kneaded catalyst having plasticity. The resultant clay was extruded by an extrusion forming machine, and 4 × 4 = 16 honeycomb segments in total having desired dimensions were obtained. Next, after drying the segments with microwaves and hot air, both end surfaces of cells were plugged so as to have checkered patterns, followed by calcination for degreasing in an oxidizing atmosphere at 550°C for three hours. Furthermore, firing was performed in an Ar inactive atmosphere at a firing temperature of 1700°C for two hours, and SiC crystal particles were combined by Si to obtain a plurality of honeycomb segments (sintered articles).
Next, the peripheral surfaces of the honeycomb segments (the sintered articles) were coated with a joining slurry, and the segments were assembled, pressed, heated and dried, thereby obtaining a joined honeycomb segment article having the whole square columnar shape. The joined honeycomb segment article was ground and processed into a columnar shape, and the peripheral surface of the article was coated with an outer peripheral coat layer made of the same material as that of the formed honeycomb segment article. The article was dried and hardened to obtain a honeycomb structure having a size: 144 in diameter × 152 mm in length, a porosity: 40%, an average pore diameter: 15 $\mu$m and a cell structure; 12 mil/300 cpsi. Incidentally, "cpsi" is an abbreviation of "cells per square inch" and is a unit representing the number of the cells per square inch. For example, 10 cpsi is about 1.55 cells/cm$^2$. In addition, "mil" means "mili inch length", and 1 mil equals 2.54 mm.
Furthermore, a predetermined amount of a ceramic slurry was injected into cells of the honeycomb structure on an inflow side thereof, and sucked from an outlet side thereof, and then the structure was dried and sintered at 700°C to form PM collection layers having PM collection layer properties shown in Table 1 in the inflow cells. The honeycomb structure was formed so as to set the thickness of each PM collection layer to 40 $\mu$m and the thickness of the whole structure to 355 $\mu$m (the thickness (12 mil [= 305 $\mu$m]) of each partition wall, the thickness (50 $\mu$m) of each PM collection layer), porosity to 54%, and the average pore diameter to 5 $\mu$m.
Afterward, the structure was dried at 120°C for two hours, and the catalyst was baked at 550°C for one hour, thereby preparing a sintered silicon carbide article (SiC-DPF) of the honeycomb structure.
The SiC-DPF obtained in this manner was coated with an oxidizing catalyst from an outlet side thereof by dipping. After the dipping, by a suction pressure from the inlet side thereof, both the partition walls and the PM collection layers were coated with the catalyst while regulating the height of the catalyst to be loaded in the PM collection layers. It is to be noted that the total amount of the coating catalyst at this time was set to 40 g/L shown in Table 1 described later. Moreover, a depth of the PM collection layer which was not coated with any catalyst (region of the PM collection layer which was not coated with any catalyst) was a region of 10% of the whole PM collection layer in the thickness direction of the PM collection layer from the inlet side of thereof. In other words, the region of the PM collection layer coated with the catalyst was a region positioned below the region of 10% of the whole PM collection layer in the thickness direction of the PM collection layer from the inlet side thereof (the region of the remaining portion of the PM collection layer excluding the region of 10% of the whole PM collection layer in the thickness direction of the PM collection layer from the inlet side thereof), and the region was a region of 90% of the whole PM collection layer. The region is represented by a numeric value shown in "depth of PM collection layer without catalyst" in Table 1 described later.
In addition, the catalyst was loaded so as to control the catalyst density ratio (PM collection layer / partition wall) to be 60% as shown in Table 1.
As the catalyst, an oxidizing catalyst was used. That is, partition walls for partitioning and forming a large number of cells disposed in the above SiC-DPF were coated with a catalyst solution including an oxidizing catalyst component in accordance with desired portions to be coated and coat amounts in examples and comparative examples described later, and the catalyst was loaded in the PM collection layers while regulating a suction pressure to control the amount of the catalyst, followed by a thermal treatment for baking at a high temperature. By this method, a purification catalyst filter was obtained. It is to be noted that the specific amount of the catalyst to be loaded is shown in Table 1 described later.

It is to be noted that as a catalyst composition, an alumina:platinum:ceria based material = 7:1:2 (mass ratio) was used, and as ceria based material of the catalyst, Ce:Zr:Pr:Y:Mn = 60:20:10:5:5 (mass ratio) or the like was used.

Furthermore, as a process of loading the catalyst in the catalyst loading filter, in case of the catalyst loading filter, a catalyst slurry was sucked as the catalyst into the PM collection layers from the side of the inlet end surface of the filter, to coat the respective layers with the catalyst. Moreover, the catalyst was loaded by regulating an air blow pressure. Afterward, the filter was first dried at 120°C for two hours, and then the catalyst was baked at 550°C for one hour. Moreover, in case of the catalyst loading filter, after the above catalyst loading step, the catalyst slurry was sucked and loaded as the catalyst into each gas purification layer from the side of the outlet end surface of the filter, to coat the layers with the catalyst. The filter was first dried at 120°C for two hours, and then the catalyst was baked at 550°C for one hour in the same manner as described above.

(Examples 2 to 5 and 7)

In Examples 2 to 5 and 7, catalyst loading filters were prepared, respectively, in the same manner as in Example 1 except that different numeric values are shown in the "Depth of PM collection layer without catalyst" of a "catalyst distribution". Specifically, a depth of the PM collection layer which was not coated with any catalyst in the above SiC-DPF was 28% of the whole PM collection layer in the thickness direction of the PM collection layer from an inlet side thereof in Example 2. Likewise, a depth of the PM collection layer which was not coated with any catalyst was 30% of the whole PM collection layer in the thickness direction of the PM collection layer from an inlet side thereof in Example 3. Similarly, a depth of the PM collection layer which was not coated with any catalyst was 40% of the whole PM collection layer in the thickness direction of the PM collection layer from an inlet side thereof in Example 4. Also, a depth of the PM collection layer which was not coated with any catalyst was 50% of the whole PM collection layer in the thickness direction of the PM collection layer from an inlet side thereof in Example 5. Likewise, a depth of the PM collection layer which was not coated with any catalyst was 100% of the whole PM collection layer in the thickness direction of the PM collection layer from an inlet side thereof in Example 7. Thus, the catalyst loading filters were obtained, respectively.

(Example 6)

In Example 6, after obtaining a honeycomb structure similar to that of Example 1, the structure was dried at 120°C for two hours, and a catalyst was baked at 550°C for one hour before forming each PM collection layer as an inlet layer, thereby preparing a sintered silicon carbide article (SiC-DPF) having a honeycomb structure. Furthermore, the SiC-DPF obtained in this manner was coated with an oxidizing catalyst from the outlet side of the filter by dipping, and a predetermined amount of a ceramic slurry was injected into cells of the honeycomb structure on an inflow side thereof, and sucked from an outlet side thereof, followed by drying and sintering at 700°C, to form the PM collection layers in the inflow cells. The filter was formed so as to set the thickness of the PM collection layer to 50 $\mu$m, the thickness of the whole filter to 355 $\mu$m (the thickness (12 mil [= 305 $\mu$m]) of each partition wall and the thickness (50 $\mu$m) of each PM collection layer), the porosity to 54%, and the average pore diameter to 5 $\mu$m.

Afterward, in the same manner as in Example 1, the structure was dried at 120°C for two hours, and the catalyst was baked at 550°C for one hour, thereby obtaining a catalyst loading filter where a depth of the PM collection layer which was not coated with any catalyst was 80% of the whole PM collection layer in the thickness direction of the PM collection layer from an inlet side thereof as Example 6 as shown in Example 6 of Table 1.

(Examples 8 to 19)

In Examples 8 to 19, catalyst loading filters were prepared, respectively, in the same manner as in Example 1 except that different numeric values are shown in the "Depth of PM collection layer without catalyst" of a "catalyst distribution" and that the catalyst density ratio was varied as shown in Table 1. Specifically, a depth of the PM collection layer which was not coated with any catalyst in the aforementioned SiC-DPF was 30% of the whole PM collection layer in the thickness direction of the PM collection layer from an inlet side thereof with a catalyst density ratio of 160% in Example 8. Likewise, the catalyst density ratio in Example 8 was changed to 153% for Example 9. Likewise, the catalyst density ratio in Example 8 was changed to 150% for Example 10. Likewise, the catalyst density ratio in Example 8 was changed to 140% for Example 11. Likewise, the catalyst density ratio in Example 8 was changed to 120% for Example 12. Likewise, the catalyst density ratio in Example 8 was changed to 100% for Example 13. Likewise, the catalyst density ratio in Example 8 was changed to 90% for Example 14. Likewise, the catalyst density ratio in Example 8 was changed to 70% for Example 15. Likewise, the catalyst density ratio in Example 8 was changed to 40% for Example 16. Likewise, the catalyst density ratio in Example 8 was changed to 20% for Example 17. Likewise, the catalyst density ratio in Example 8 was changed to 10% for Example 18. Likewise, the catalyst density ratio in Example 8 was changed to 0% for Example 19.

(Examples 20 to 25)

In Examples 20 to 25, catalyst loading filters were prepared, respectively, in the same manner as in Example 1 except that different numeric values are shown in the "Depth of PM collection layer without catalyst" of a "catalyst distribution" and that the catalyst density ratio was varied as shown in Table 1. Specifically, a depth of the PM collection layer which was not coated with any catalyst in the aforementioned SiC-DPF was 80% of the whole PM collection layer in the thickness direction of the PM collection layer from an inlet side thereof with a catalyst density ratio of 152% in Example 20. Likewise, the catalyst density ratio in Example 20 was changed to 150% for Example 21. Likewise, the catalyst density ratio in Example 20 was changed to 100% for Example 22. Likewise, the catalyst density ratio in Example 20 was changed to 50% for Example 23. Likewise, the catalyst density ratio in Example 20 was changed to 20% for Example 24. Likewise, the catalyst density ratio in Example 20 was changed to 0% for Example 25.

(Comparative Examples 1 and 2)

In Comparative Example 1, a catalyst loading filter which was not provided with any PM collection layer as shown in Table 1 was prepared. Specifically, after obtaining a honeycomb structure similar to that of Example 1, the structure was dried at 120°C for two hours, and a catalyst was baked at 550°C for one hour, thereby preparing a sintered silicon carbide article (SiC-DPF) having a honeycomb structure. Furthermore, the SiC-DPF obtained in this manner was coated with an oxidizing catalyst from the outlet side of the filter by dipping, to obtain a catalyst loading filter of Comparative Example 1 shown in Table 1. In Comparative Example 2, after obtaining a honeycomb structure similar to the structure of Example 1, a honeycomb structure was obtained. Furthermore, after forming PM collection layers in the same manner as in Example 1, as a region where any catalyst was not loaded in each PM collection layer, a region of 0% of the whole PM collection layer in the thickness direction of the PM collection layer from an inlet side thereof was obtained (i.e., the whole PM collection layer was coated with the catalyst.

The above experiments were performed by using the catalyst loading filters of Examples 1 to 20 and Comparative Examples 1 and 2 obtained as described above. Results obtained from this experiment are shown in Table 1 described later.

[Table 1]

| No. | Porosity | Average pore diameter | Cell structure | Properties of PM collection layer | | | Catalyst distribution | | Catalyst amount | Catalyst density ratio* | Experiment 1-1 | Experiment 1-2 |
|-----|----------|----------------------|----------------|-----------|----------|----------------------|-----------------|-----------------------------------------|-----------------|------------------------|----------------|----------------|
| | | | | Thickness | Porosity | Average pore diameter | Partition walls | Depth of PM collection layer w/o catalyst | | | | |
| | % | μm | mil/cpsi | μm | % | μm | - | % | g/L | % | kPa | kPa |
| Comp. Ex. 1 | 40 | 15 | 12/300 | 0 | - | - | Present | - | 40 | - | 6.7 | 23.4 |
| Comp. Ex. 2 | 40 | 15 | 12/300 | 40 | 54 | 5 | Present | 0 | 40 | 60 | 6.1 | 36.2 |
| Example 1 | 40 | 15 | 12/300 | 40 | 54 | 5 | Present | 10 | 40 | 60 | 3.8 | 32.5 |
| Example 2 | 40 | 15 | 12/300 | 40 | 54 | 5 | Present | 28 | 40 | 60 | 3.9 | 27.6 |
| Example 3 | 40 | 15 | 12/300 | 40 | 54 | 5 | Present | 30 | 40 | 60 | 3.6 | 25.6 |
| Example 4 | 40 | 15 | 12/300 | 40 | 54 | 5 | Present | 40 | 40 | 60 | 3.6 | 25.4 |
| Example 5 | 40 | 15 | 12/300 | 40 | 54 | 5 | Present | 50 | 40 | 60 | 3.5 | 25.2 |
| Example 6 | 40 | 15 | 12/300 | 40 | 54 | 5 | Present | 80 | 40 | 60 | 3.6 | 24.5 |
| Example 7 | 40 | 15 | 12/300 | 40 | 54 | 5 | Present | 100 | 40 | 60 | 3.6 | 24.1 |
| Example 8 | 40 | 15 | 12/300 | 40 | 54 | 5 | Present | 30 | 40 | 160 | 5.8 | 39.8 |
| Example 9 | 40 | 15 | 12/300 | 40 | 54 | 5 | Present | 30 | 40 | 153 | 5.2 | 32.6 |
| Example 10 | 40 | 15 | 12/300 | 40 | 54 | 5 | Present | 30 | 40 | 150 | 4.8 | 27.1 |

EP 2 174 701 B1

(continued)

| No. | Porosity | Average pore diameter | Cell structure | Properties of PM collection layer | | | Catalyst distribution | | Catalyst amount | Catalyst density ratio* | Experiment 1-1 | Experiment 1-2 |
|---|---|---|---|---|---|---|---|---|---|---|---|---|
| | | | | Thickness | Porosity | Average pore diameter | Partition walls | Depth of PM collection layer w/o catalyst | | | | |
| | % | μm | mil/cpsi | μm | % | μm | - | % | g/L | % | kPa | kPa |
| Example 11 | 40 | 15 | 12/300 | 40 | 54 | 5 | Present | 30 | 40 | 140 | 4.2 | 26.4 |
| Example 12 | 40 | 15 | 12/300 | 40 | 54 | 5 | Present | 30 | 40 | 120 | 4 | 26.6 |
| Example 13 | 40 | 15 | 12/300 | 40 | 54 | 5 | Present | 30 | 40 | 100 | 3.8 | 25.9 |
| Example 14 | 40 | 15 | 12/300 | 40 | 54 | 5 | Present | 30 | 40 | 90 | 3.7 | 25.7 |
| Example 15 | 40 | 15 | 12/300 | 40 | 54 | 5 | Present | 30 | 40 | 70 | 3.5 | 25.6 |
| Example 16 | 40 | 15 | 12/300 | 40 | 54 | 5 | Present | 30 | 40 | 40 | 3.6 | 24.9 |
| Example 17 | 40 | 15 | 12/300 | 40 | 54 | 5 | Present | 30 | 40 | 20 | 3.5 | 24.6 |
| Example 18 | 40 | 15 | 12/300 | 40 | 54 | 5 | Present | 30 | 40 | 10 | 3.6 | 24.1 |
| Example 19 | 40 | 15 | 12/300 | 40 | 54 | 5 | Present | 30 | 40 | 0 | 3.6 | 23.8 |
| Example 20 | 40 | 15 | 12/300 | 40 | 54 | 5 | Present | 80 | 40 | 152 | 5.5 | 32.4 |
| Example 21 | 40 | 15 | 12/300 | 40 | 54 | 5 | Present | 80 | 40 | 150 | 4.5 | 28.6 |
| Example 22 | 40 | 15 | 12/300 | 40 | 54 | 5 | Present | 80 | 40 | 100 | 3.9 | 27.1 |

EP 2 174 701 B1

(continued)

| No. | Porosity | Average pore diameter | Cell structure | Properties of PM collection layer | | | Catalyst distribution | | Catalyst amount | Catalyst density ratio* | Experiment 1-1 | Experiment 1-2 |
|---|---|---|---|---|---|---|---|---|---|---|---|---|
| | | | | Thickness | Porosity | Average pore diameter | Partition walls | Depth of PM collection layer w/o catalyst | | | | |
| | % | μm | mil/cpsi | μm | % | μm | - | % | g/L | % | kPa | kPa |
| Example 23 | 40 | 15 | 12/300 | 40 | 54 | 5 | Present | 80 | 40 | 50 | 3.9 | 26.3 |
| Example 24 | 40 | 15 | 12/300 | 40 | 54 | 5 | Present | 80 | 40 | 20 | 3.9 | 26.1 |
| Example 24 | 40 | 15 | 12/300 | 40 | 54 | 5 | Present | 80 | 40 | 0 | 3.9 | 25.9 |
| *PM collection layer / Partition wall | | | | | | | | | | | | |

(Test Result Consideration 1)

In Examples 1 to 20 in which any catalyst was not deposited only on a portion where PM was deposited, and hence any immediate situation of a pressure loss was not seen, whereby satisfactory results could be obtained. Above all, in Examples 3 to 7, 10 to 19, and 21 to 25, it was proved that decrease of pressure loss was sufficiently obtained in each of the low flow rate (Experiment 1-1) and the high flow rate (Experiment 1-2), and they were confirmed to be distinctly good.

(Test Result Consideration 2)

On the other hand, in Comparative Example 1, any film of inlet layer was not formed, and hence soot entered pores in partition walls. It was demonstrated in Experiment 1-1 that a pressure loss due to the deposited soot was large. Moreover, it has been seen that, in Comparative Example 2, the pressure loss was sufficiently decreased owing to the effect of the formed films of PM collection layers at a low flow rate (Experiment 1-1). However, at a high flow rate (Experiment 1-2), as compared with the low flow rate, a slight amount of PM entered the pores in the PM collection layers. When the layers having a small average pore diameter are coated with the catalyst (porosity or the average pore diameter lower owing to the catalyst coat), pore flow paths are clogged with the deposited PM, and the pressure loss immediately increases.

(Test Result Consideration 3)

In catalyst coat distributions of 30% and 80% catalyst-less height (depth of the portion without the catalyst in the PM collection layer) with respect to the thickness direction of the PM collection layer, the catalyst amount in the catalyst loading portion of the PM collection layer was varied with respect to the amount of the catalyst loaded on the partition walls of the base material to evaluate the pressure loss. As a result, in the case that the density ratio of the catalyst amount in the catalyst loading portion of the PM collection layer to the amount of the catalyst loaded on the partition walls of the base material was 150% or less, no bad influence on the pressure loss performance was shown. It can be considered that this is because PM does not reach pores in the region where the catalyst-less height with respect to the thickness direction of the PM collection layer is 30% or less. On the other hand, it is presumed that, when the density ratio is above 150%, even if PM does not reach pores, a pore neck portion is clogged with the catalyst to remarkably decrease permeability itself of the PM collection layer, thereby sharply increasing the pressure loss.

[4-1] Experiment 2-1:

Filters were mounted in a 2.0L diesel engine, and NOx emissions in an NEDC mode were evaluated in accordance with European regulations.

[4-2] Experiment 2-2:

Next, each filter mounted in a vehicle ran as much as 1000 km to be aged, and the NOx emissions were evaluated again on the same test conditions.

[5] DPF:

(Example 26, Comparative Example 3)

In Example 26, a catalyst loading filter was prepared and experimented in the same manner as in Example 6 except that as shown in Table 2, porosity control, the type of an NOx purification catalyst to be loaded and the amount of the catalyst to be loaded had different values. Specifically, the NOx purification catalyst was loaded (the amount of the catalyst coat: 120 g/L) in an SiC-DPF having a porosity of 60%, an average pore diameter of 15 $\mu$m and a cell structure of 12 mil/300 cpsi. More specifically, before forming a film of each PM collection layer as an inlet layer, the filter was dried at 120°C for two hours, and then the catalyst was baked at 550°C for one hour, thereby preparing a sintered silicon carbide article (SiC-DPF) having a honeycomb structure. Furthermore, the SiC-DPF obtained in this manner was coated with an oxidizing catalyst from an outlet side of the filter by dipping, and then a predetermined amount of a ceramic slurry was injected into inflow cells of the honeycomb structure, and sucked from an outlet side of the structure, followed by drying and sintering at 700°C, to form the PM collection layers in the inflow cells. Afterward, in the same manner as in Example 6, the structure was dried at 120°C for two hours, and the catalyst was baked at 550°C for one hour, thereby obtaining a catalyst loading filter in which both the PM collection layers and partition walls were coated with the catalyst as shown in Example 26 of Table 2. Moreover, in Comparative Example 3, a similar catalyst loading filter was prepared and experimented except that as shown in Table 2, porosity control, the type of the NOx purification catalyst to be loaded and the amount of the catalyst to be loaded were different from those of Comparative Example 1 of Experiment 1 described above. Specifically, the NOx purification catalyst was loaded (the amount of the catalyst coat: 120 g/L) in an SiC-DPF having a porosity of 60%, an average pore diameter of 15 μm and a cell structure of 12 mil/300 cpsi. More specifically, after obtaining a honeycomb structure similar to that of Example 1, the filter was dried at 120°C for two hours, and then the catalyst was baked at 550°C for one hour, thereby preparing a sintered silicon carbide article (SiC-DPF) having a honeycomb structure. Furthermore, the SiC-DPF obtained in this manner was coated with an NOx purification catalyst from an outlet side of the filter, to obtain a catalyst loading filter of Comparative Example 3 in which only partition walls were coated with the catalyst as shown in Table 2.

[5-1] Catalyst:

As the above NOx purification catalyst, a catalyst obtained by regulating y alumina, platinum, palladium, barium or potassium was used, and each filter as coated with the catalyst by dipping in the same manner as in Experiment 1 described above. It is to be noted that the specific amount of the catalyst to be loaded is shown in Table 2 described later.
The above experiments were performed by using the catalyst loading filters of Example 26 and Comparative Example 3 obtained as described above. Results obtained from the experiments are shown in Table 2 described later.

[Table 2]

| No. | Porosity | Pore diameter | Cell structure | Properties of PM collection layer | | | Catalyst distribution | | Catalyst amount | Catalyst density ratio* | Experiment 2-1 | Experiment 2-2 |
| | | | | Thickness | Porosity | Pore diameter | Partition walls | Depth of PM collection layer w/o catalyst | | | | |
| | % | μm | mil/cpsi | μm | % | μm | | % | g/L | % | mg/km | mg/km |
| Comp. Ex. 3 | 60 | 15 | 12/300 | 0 | - | - | Present | - | 120 | - | 47 | 92 |
| Example 26 | 60 | 15 | 12/300 | 40 | 54 | 5 | Present | 80 | 120 | 60 | 48 | 59 |

*PM collection layer / Partition wall

(Test Result Consideration 4)

Comparative Example 3 and Example 26 were coated with an equal amount of the same catalyst, and hence had an equal level of initial NOx emissions (Experiment 2-1). However, as to the emissions after running along 1000 km (Experiment 2-2), Comparative Example 3 had a large partition wall average pore diameter of 15 $\mu$m. Therefore, PM including sulfur was deposited on the partition walls, and the performance of the NOx purification catalyst which coated the partition walls remarkably deteriorated, thereby deteriorating NOx emissions. On the other hand, in Example 26, the inlet layers having a small average pore diameter collect the PM, and any sulfur was not deposited on the NOx purification catalyst with which the partition walls were coated, whereby the NOx emissions were hardly deteriorated.

A catalyst loading filter of the present invention can preferably be used to collect or remove particulates included in an exhaust gas discharged from a diesel engine, an engine for a usual car, an internal combustion engine typified by an engine for a large-sized car such as a truck or a bus, or various types of burning devices.

**Claims**

1. A catalyst loading filter (1) made of a base material of a honeycomb structure including a plurality of cells (3) as through channels of an exhaust gas which are partitioned by partition walls (4) made of a porous ceramic material having a large number of pores,

   the filter including plugging portions (13) which alternately plug one opening end (11a) and the other opening end (11b) of each of the plurality of cells,

   wherein the partition walls are provided with PM collection layers (20) having a smaller average pore diameter than that of the partition walls,

   **characterized in that**

   the PM collection layers (20) include an upstream side surface, and the partition walls (4) are coated with the catalyst (15) without coating a portion of the PM collection layers including the upstream side surface of the PM collection layers, wherein the portion including the surface of the PM collection layers (20) which is not coated with the catalyst (15) is 30% or more of a thickness of PM collection layer (20) from the surface of the PM collection layers toward the thickness direction.

2. The catalyst loading filter according to claim 1, wherein the density of the catalyst (15) which coats the PM collection layers (20) is 150% or less of that of the catalyst (15) which coats the partition walls (4).

3. The catalyst loading filter according to claim 1 or claim 2, wherein the catalyst (15) which coats the partition walls (4) is an NOx removing catalyst.

4. A manufacturing method of the catalyst loading filter according to any one of claims 1 to 3, including the steps of either:

   (i) coating, with the catalyst (15), the partition walls (4) disposed in the base material of the honeycomb structure; and then forming the PM collection layers (20) onto the base material; or
   (ii) forming the PM collection layers (20) having a pore former added thereto on to the base material; coating, with the catalyst (15), regions of the PM collection layers (20) and/or the partition walls (4), other than said portion of the PM collection layers including the upstream side surface of the PM collection layers; and then burning off the pore former to form pores in the PM collection layers during the baking of the catalyst.

**Patentansprüche**

1. Katalysatorbeladungsfilter (1), hergestellt aus einem Trägermaterial aus einer Wabenstruktur, die eine Vielzahl von Zellen (3) als Durchgangskanäle für ein Abgas, die durch aus einem porösen Keramikmaterial mit einer großen Anzahl an Poren hergestellte Trennwände (4) getrennt sind, umfasst,

   wobei der Filter Verschlussabschnitte (13) umfasst, die abwechselnd ein Öffnungsende (11a) und das andere Öffnungsende (11b) jeder der Vielzahl von Zellen verschließen,

   wobei die Trennwände PM-Sammelschichten (20) mit einem kleineren mittleren Porendurchmesser als jenem der Trennwände aufweisen,

   **dadurch gekennzeichnet, dass**

   die PM-Sammelschichten (20) eine stromaufwärtige Oberfläche umfassen und die Trennwände (4) mit dem Katalysator (15) beschichtet sind, ohne dass ein Abschnitt der PM-Sammelschichten einschließlich der stromaufwärtige Oberfläche der PM-Sammelschichten beschichtet ist, wobei der Abschnitt, der die Oberfläche der nicht mit dem Katalysator (15) beschichteten PM-Sammelschichten (20) beinhaltet, 30 % oder mehr einer Dicke der PM-Sammelschicht (20) von der Oberfläche der PM-Sammelschichten in Dickerichtung ist.

2. Katalysatorbeladungsfilter nach Anspruch 1, wobei die Dichte des Katalysators (15), der die PM-Sammelschichten (20) beschichtet, 150% oder weniger von jener des Katalysators (15), der die Trennwände (4) beschichtet, beträgt.

3. Katalysatorbeladungsfilter nach Anspruch 1 oder Anspruch 2, wobei der Katalysator (15), der die Trennwände (4) beschichtet, ein NOx-Entfernungskatalysator ist.

4. Verfahren zur Herstellung eines Katalysatorbeladungsfilters nach einem der Ansprüche 1 bis 3, das entweder die Schritte aus (i) oder die Schritte aus (ii) umfasst:

(i) Beschichten der Trennwände (4), die in dem Trägermaterial der Wabenstruktur angeordnet sind, mit dem Katalysator (15); und dann Bilden der PM-Sammelschichten (20) auf dem Trägermaterial; oder
(ii) Bilden der PM-Sammelschichten (20) mit einem dazu zugesetzten Porenbilder auf dem Trägermaterial; Beschichten von Regionen der PM-Sammelschichten (20) und/oder der Trennwände (4), die nicht der Abschnitt der PM-Sammelschichten ist, der die stromaufwärtige Oberfläche der PM-Sammelschichten umfasst, mit dem Katalysator (15); dann Wegbrennen des Porenbilders, um während des Brennens des Katalysators Poren in den PM-Sammelschichten zu bilden.

## Revendications

1. Filtre de chargement de catalyseur (1) constitué d'un matériau de base à structure en nid d'abeille comprenant une pluralité de cellules (3) servant de canaux traversants pour un gaz d'échappement qui sont séparées par des parois de séparation (4) réalisées en un matériau céramique poreux ayant un grand nombre de pores,
le filtre comprenant des parties d'obturation (13) qui obturent alternativement une extrémité d'ouverture (11a) et l'autre extrémité d'ouverture (11b) de chacune de la pluralité de cellules,
dans lequel les parois de séparation sont pourvues de couches de collecte de matière particulaire (MP) (20) ayant un diamètre de pores moyen inférieur à celui des parois de séparation,
**caractérisé en ce que**
les couches de collecte de MP (20) comprennent une surface latérale amont et les parois de séparation (4) sont revêtues du catalyseur (15) sans recouvrir une partie des couches de collecte de MP, y compris la surface latérale amont des couches de collecte de MP, dans lequel la partie comprenant la surface des couches de collecte de MP (20) qui n'est pas recouverte du catalyseur (15) correspond à 30 % ou plus d'une épaisseur de couche de collecte de MP (20) depuis la surface des couches de collecte de MP vers la direction d'épaisseur.

2. Filtre de chargement de catalyseur selon la revendication 1, dans lequel la densité du catalyseur (15) qui recouvre les couches de collecte de MP (20) est égale ou inférieure à 150 % de celle du catalyseur (15) qui recouvre les parois de séparation (4).

3. Filtre de chargement de catalyseur selon la revendication 1 ou la revendication 2, dans lequel le catalyseur (15) qui recouvre les parois de séparation (4) est un catalyseur d'élimination de NOx.

4. Procédé de fabrication du filtre de chargement de catalyseur selon l'une quelconque des revendications 1 à 3, comprenant les étapes consistant à :

(i) revêtir, avec le catalyseur (15), les parois de séparation (4) disposées dans le matériau de base de la structure en nid d'abeille ; et former les couches de collecte de MP (20) sur le matériau de base ; ou
(ii) former les couches de collecte de MP (20) ayant un agent porogène ajouté sur le matériau de base ; revêtir, avec le catalyseur (15), des zones des couches de collecte de MP (20) et/ou des parois de séparation (4), autres que ladite partie des couches de collecte de MP, comprenant la surface latérale amont des couches de collecte de MP ; puis brûler l'agent porogène pour former des pores dans les couches de collecte de MP lors de la cuisson du catalyseur.

FIG.1

FIG.2

FIG.3

EP 2 174 701 B1

FIG.4

FIG.5

G1

20

4

FIG.6

(SMALL PORE DIAMETER)

(SMALL PORE DIAMETER)

5

20

15

G1

15

G1

15

20

Z

4

15(15a)

4

(LARGE PORE DIAMETER)

15(15a)

15(15a)

(LARGE PORE DIAMETER)

EP 2 174 701 B1

FIG.7

G1

20

Z{

FIG.8

EP 2 174 701 B1

FIG.9

CUT OUT

EP 2 174 701 B1

FIG.10

EP 2 174 701 B1

FIG.11

(SMALL PORE DIAMETER)　　　　　(SMALL PORE DIAMETER)

(LARGE PORE DIAMETER)

(LARGE PORE DIAMETER)

EP 2 174 701 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1437491 A1
- EP 0736503 A1
- EP 0766993 A2
- EP 1273339 A1
- EP 1576998 A2
- JP 7505083 T
- US 5221484 A